# EUROPÄISCHE PATENTANMELDUNG

(11) **EP 4 446 690 A1**
(43) Veröffentlichungstag der Anmeldung: **16.10.2024**
(21) Anmeldenummer: 24162782.7
(22) Anmeldetag: 11.03.2024
(51) Int. Cl.: F41H 5/22, B60R 21/13, F41H 7/02

(54) **ÜBERROLLSCHUTZSYSTEM UND GESCHÜTZTES FAHRZEUG**

(30) Priorität: 30.03.2023 DE 102023108245
(71) Anmelder: Rheinmetall Landsysteme GmbH, 29345 Südheide (DE)
(72) Erfinder: SEEGER, Martin, 34117 Kassel (DE); BLÄßING, Dr., Tobias, 34314 Hohenkirchen/Espenau (DE); GERLACH, Klaus-Peter, 34212 Melsungen (DE); BECKMANN, Armin, 34621 Frielendorf (DE)
(74) Vertreter: Horn Kleimann Waitzhofer Schmid-Dreyer Patent- und Rechtsanwälte PartG mbB

(57) **Zusammenfassung**

Überrollschutzsystem (19A, 19B, 19C) für ein geschütztes Fahrzeug (1), mit einem Auslöseelement (42) zum Auslösen des Überrollschutzsystems (19A, 19B, 19C), einem Tragelement (46) zum Tragen eines Besatzungsmitglieds (29) und einer Kopplungseinheit (50), die das Auslöseelement (42) mit dem Tragelement (46) koppelt, um das Tragelement (46) bei einem Überschlag des geschützten Fahrzeugs (1) von einem ausgefahrenen Zustand (Z100), in dem sich das Besatzungsmitglied (29) teilweise innerhalb und teilweise außerhalb des geschützten Fahrzeugs (1) aufhält, in einen eingefahrenen Zustand (Z200), in dem sich das Besatzungsmitglied (29) vollständig innerhalb des geschützten Fahrzeugs (1) aufhält, zu verbringen, so dass das Besatzungsmitglied (29) während des Überschlags des geschützten Fahrzeugs (1) geschützt ist.

## Beschreibung

Die vorliegende Erfindung betrifft ein Überrollschutzsystem für ein geschütztes Fahrzeug und ein geschütztes Fahrzeug mit einem derartigen Überrollschutzsystem.

Geschützte Fahrzeuge, wie beispielsweise Schützenpanzer, weisen gemäß betriebsinternen Erkenntnissen oftmals eine unübersichtliche Fahrzeuggeometrie auf. Dies kann es erforderlich machen, dass einzelne Besatzungsmitglieder über Luke fahren. Dies kann stehend oder sitzend erfolgen. "Über Luke" heißt dabei, dass der Oberkörper oder zumindest der Kopf des jeweiligen Besatzungsmitglieds aus einer Lukenöffnung des geschützten Fahrzeugs in eine Umgebung des geschützten Fahrzeugs hineinragt. Dies kann zum Beispiel für die Unterstützung des Fahrers durch den Kommandanten oder für eine bessere Führbarkeit des geschützten Fahrzeugs im zivilen Straßenverkehr erforderlich sein. Dieser Umstand kann dazu führen, dass im Falle eines Überschlags des geschützten Fahrzeugs das über Luke fahrende Besatzungsmitglied tödlichen Gefahren ausgesetzt ist. Im schlimmsten Fall kann es dazu kommen, dass das Besatzungsmitglied durch das sich überschlagende geschützte Fahrzeug zerquetscht und somit tödlich verletzt wird.

Vor diesem Hintergrund besteht eine Aufgabe der vorliegenden Erfindung darin, ein verbessertes Überrollschutzsystem für ein geschütztes Fahrzeug zur Verfügung zu stellen.

Demgemäß wird ein Überrollschutzsystem für ein geschütztes Fahrzeug vorgeschlagen. Das Überrollschutzsystem umfasst ein Auslöseelement zum Auslösen des Überrollschutzsystems, ein Tragelement zum Tragen eines Besatzungsmitglieds und eine Kopplungseinheit, die das Auslöseelement mit dem Tragelement koppelt, um das Tragelement bei einem Überschlag des geschützten Fahrzeugs von einem ausgefahrenen Zustand, in dem sich das Besatzungsmitglied teilweise innerhalb und teilweise außerhalb des geschützten Fahrzeugs aufhält, in einen eingefahrenen Zustand, in dem sich das Besatzungsmitglied vollständig innerhalb des geschützten Fahrzeugs aufhält, zu verbringen, so dass das Besatzungsmitglied während des Überschlags des geschützten Fahrzeugs geschützt ist.

Dadurch, dass das Tragelement mitsamt dem Besatzungsmitglied bei einem Überschlag des geschützten Fahrzeugs von dem ausgefahrenen Zustand in den eingefahrenen Zustand in das geschützte Fahrzeug hineinverlagert wird, werden Verletzungen des Besatzungsmitglieds bei einem Überschlag des geschützten Fahrzeugs zuverlässig verhindert.

Unter einem "Überrollschutzsystem" ist vorliegend demgemäß bevorzugt kein System zu verstehen, welches ein Überrollen oder einen Überschlag des geschützten Fahrzeugs an sich verhindert, sondern ein System, welches mögliche negative Folgen eines Überschlags des geschützten Fahrzeugs für das Besatzungsmitglied verhindert oder zumindest reduziert. Das Überrollschutzsystem kann auch als Überrollschutzvorrichtung bezeichnet werden. Das Überrollschutzsystem kann bevorzugt an geschützten Fahrzeugen, die ab Werk noch kein derartiges Überrollschutzsystem aufweisen, nachgerüstet werden. Das Überrollschutzsystem ist demgemäß nachrüstbar. Das Überrollschutzsystem ist bevorzugt modular aufgebaut. Das heißt insbesondere, dass das Überrollschutzsystem als Nachrüstmodul an dem geschützten Fahrzeug angebracht werden kann. Alternativ kann das geschützte Fahrzeug auch ab Werk mit einem derartigen Überrollschutzsystem ausgerüstet werden.

Darunter, dass das Fahrzeug "geschützt" ist, ist vorliegend insbesondere zu verstehen, dass das geschützte Fahrzeug gegen Beschuss, Sprengfallen, unkonventionelle Spreng- oder Brandvorrichtungen (USBV, Engl.: Improvised Explosive Devices, IED), Minen oder dergleichen geschützt ist. Hierzu kann das geschützte Fahrzeug gepanzert sein. Das geschützte Fahrzeug kann ein Kettenfahrzeug oder ein Radfahrzeug sein. Nachfolgend wird davon ausgegangen, dass das geschützte Fahrzeug ein Radfahrzeug ist. Das geschützte Fahrzeug kann mehrere Radachsen aufweisen, an denen Räder vorgesehen sind. Beispielsweise sind vier Radachsen mit acht Rädern vorgesehen. Es können jedoch auch weniger oder mehr als vier Radachsen vorgesehen sein.

Das geschützte Fahrzeug weist vorzugsweise eine geschützte Fahrzeugzelle auf. Die geschützte Fahrzeugzelle kann insbesondere ein austauschbares Missionsmodul des geschützten Fahrzeugs sein. Ein Beispiel für ein derartiges Missionsmodul ist ein Sanitätsmodul. Das geschützte Fahrzeug, insbesondere die geschützte Fahrzeugzelle, weist beispielsweise eine geneigte Vorderwand und ein Dach auf.

An dem geschützten Fahrzeug oder an der geschützten Fahrzeugzelle können eine oder mehrere Lukenöffnungen vorgesehen sein. Jeder Lukenöffnung kann ein derartiges Überrollschutzsystem zugeordnet sein. Ferner kann jede Lukenöffnung mit Hilfe eines beweglichen, insbesondere verschiebbaren oder verschwenkbaren, Lukendeckels geöffnet und geschlossen werden. Die Lukenöffnung oder die Lukenöffnungen können an einer Wandung des geschützten Fahrzeugs oder der geschützten Fahrzeugzelle vorgesehen werden. Die Wandung kann Teil des vorgenannten Dachs oder der vorgenannten Vorderwand sein.

Dass sich das Besatzungsmitglied "teilweise innerhalb und teilweise außerhalb" des geschützten Fahrzeugs aufhält oder befindet, kann vorliegend bedeuten, dass das Besatzungsmitglied beispielsweise seinen Oberkörper, insbesondere zumindest seinen Kopf, aus einer wie zuvor erwähnten Lukenöffnung streckt, um über Luke zu fahren. In diesem Fall kann sich beispielsweise der Unterkörper des Besatzungsmitglieds in einem Innenraum des geschützten Fahrzeugs oder der geschützten Fahrzeugzelle befinden, wobei sich der Oberkörper außerhalb dieses Innenraums in einer Umgebung des geschützten Fahrzeugs befindet. "Teilweise innerhalb und teilweise außerhalb" ist vorliegend insbesondere so zu verstehen, dass sich das Besatzungsmitglied gleichzeitig teilweise innerhalb und teilweise außerhalb des Innenraums aufhält.

Dem geschützten Fahrzeug ist bevorzugt ein Koordinatensystem mit einer ersten Raumrichtung, Längsrichtung oder x-Richtung, einer zweiten Raumrichtung, Hochrichtung oder y-Richtung und einer dritten Raumrichtung, Querrichtung oder z-Richtung zugeordnet. Die Richtungen sind insbesondere senkrecht zueinander orientiert. Eine Bewegung des geschützten Fahrzeugs um die x-Richtung kann als Rollen oder Rollbewegung bezeichnet werden. Eine Bewegung des geschützten Fahrzeugs um die y-Richtung kann als Gieren oder Gierbewegung bezeichnet werden. Eine Bewegung des geschützten Fahrzeugs um die z-Richtung kann als Nicken oder Nickbewegung bezeichnet werden. Eine Fahrtrichtung des geschützten Fahrzeugs ist vorzugsweise entgegen der x-Richtung orientiert. Das geschützte Fahrzeug kann sich jedoch auch - beispielsweise bei einer Rückwärtsfahrt - entgegen der Fahrtrichtung fortbewegen.

Unter einem "Überschlag" des geschützten Fahrzeugs ist vorliegend insbesondere zu verstehen, dass sich das geschützte Fahrzeug zumindest von den Rädern auf das Dach oder auf die Vorderwand dreht. Dies schließt jedoch nicht aus, dass sich das geschützte Fahrzeug bei dem Überschlag zumindest einmal oder auch mehrmals um die bevorzugt senkrecht zu den Radachsen orientierte x-Richtung und/oder um die bevorzugt parallel zu den Radachsen orientierte z-Richtung überschlägt oder dreht. Ein Überschlag des geschützten Fahrzeugs kann auch eine kombinierte Roll-, Gier- und/oder Nickbewegung sein.

Das Auslöseelement kann stangenförmig sein. Insbesondere kann das Auslöseelement zum Auslösen des Überrollschutzsystems von einem ausgefahrenen Zustand in einen eingefahrenen Zustand verbracht werden. Das Auslöseelement ragt zumindest in dem ausgefahrenen Zustand insbesondere über eine Außenseite der vorgenannten Wandung des geschützten Fahrzeugs heraus. Zum Verbringen des Auslöseelements von dem ausgefahrenen Zustand in den eingefahrenen Zustand wird das Auslöseelement in Richtung der Außenseite der Wandung verlagert. Das Auslöseelement kann in einem Führungselement, insbesondere in Form einer Führungshülse, linear verschieblich gelagert sein. Bei dem Verbringen des Auslöseelements von dem ausgefahrenen Zustand in den eingefahrenen Zustand kann das Auslöseelement in das Führungselement hineingeschoben oder hineingedrückt werden.

Dass das Auslöseelement das Überrollschutzsystem "auslöst", bedeutet vorliegend insbesondere, dass das Auslöseelement bei einem Überschlag des geschützten Fahrzeugs mit einem Untergrund, auf dem sich das geschützte Fahrzeug fortbewegt, oder mit Objekten in der Umgebung des geschützten Fahrzeugs in Kontakt kommt. Hierdurch wird das Auslöseelement von dem ausgefahrenen Zustand in den eingefahrenen Zustand verbracht. Dadurch wiederum wird das Tragelement mittelbar über die Kopplungseinheit von dem ausgefahrenen Zustand in den eingefahrenen Zustand verbracht. "Mittelbar" heißt dabei insbesondere, dass die Kopplungseinheit zwischen das Auslöseelement und das Tragelement geschaltet oder zwischen diesen angeordnet ist.

Das Tragelement kann ein Sitz für das Besatzungsmitglied sein. Demgemäß können vorliegend die Begriffe "Tragelement" und "Sitz" beliebig gegeneinander getauscht werden. Alternativ kann das Tragelement auch eine Stehplattform für das Besatzungsmitglied sein. Das Besatzungsmitglied kann an einer derartigen Stehplattform festgeschnallt sein, so dass das Besatzungsmitglied bei einem Überschlag des geschützten Fahrzeugs nicht aus der geschützten Fahrzeugzelle herausgeschleudert werden kann. Nachfolgend wird jedoch davon ausgegangen, dass das Überrollschutzsystem ein Tragelement in Form eines Sitzes umfasst. Das Besatzungsmitglied kann an oder auf dem Tragelement in Form eines Sitzes festgeschnallt sein, so dass das Besatzungsmitglied auch in diesem Fall bei einem Überschlag des geschützten Fahrzeugs nicht aus der geschützten Fahrzeugzelle herausgeschleudert werden kann.

Dass das Besatzungsmitglied während eines Überschlags des geschützten Fahrzeugs "geschützt" ist, bedeutet vorliegend insbesondere, dass das Überrollschutzsystem verhindert, dass das Besatzungsmitglied zwischen dem geschützten Fahrzeug und dem Untergrund, auf dem sich das geschützte Fahrzeug fortbewegt, eingeklemmt wird. Der eingefahrene Zustand des Tragelements kann auch als eingezogener Zustand des Tragelements bezeichnet werden. Insbesondere wird das Besatzungsmitglied während eines Überschlags des geschützten Fahrzeugs in dem Innenraum des geschützten Fahrzeugs oder der geschützten Fahrzeugzelle geschützt.

Die von der Kopplungseinheit verwirklichte Kopplung kann rein mechanisch, das heißt ohne elektronische oder elektrische Komponenten, fungieren. In diesem Fall kann die Kopplungseinheit beispielsweise ein Getriebe sein oder ein Getriebe aufweisen, welches das Auslöseelement mechanisch mit einer Verstelleinheit des Tragelements oder direkt mit dem Tragelement koppelt. Ferner kann die Kopplungseinheit im einfachsten Fall beispielsweise eine formschlüssige Verbindung, beispielsweise eine Schraubverbindung, eine stoffschlüssige Verbindung, beispielsweise eine Schweißverbindung, oder eine kraftschlüssige Verbindung, beispielsweise eine Klemmverbindung, sein, die zwischen dem Auslöseelement und dem Tragelement vorgesehen ist. Alternativ kann die Kopplungseinheit jedoch auch elektronisch, insbesondere elektromechanisch, fungieren.

Eine formschlüssige Verbindung entsteht durch das Ineinander- oder Hintergreifen von mindestens zwei Verbindungspartnern. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder der Verbindungspartner wieder voneinander trennen lassen. Eine kraftschlüssige Verbindung setzt eine Normalkraft auf miteinander zu verbindende Flächen voraus. Kraftschlüssige Verbindungen können durch Reibschluss verwirklicht werden. Die gegenseitige Verschiebung der Flächen ist verhindert, solange eine durch die Haftreibung bewirkte Gegenkraft nicht überschritten wird.

Die Kopplungseinheit kann bei dem Verbringen des Auslöseelements von dem ausgefahrenen Zustand in den eingefahrenen Zustand auch dazu eingerichtet sein, einen Auslöseelementverfahrweg des Auslöseelements entgegen der y-Richtung in einen Tragelementverfahrweg des Tragelements bei dem Verbringen desselben von dem ausgefahrenen Zustand in den eingefahrenen Zustand entgegen der y-Richtung umzusetzen, der größer als der Auslöseelementverfahrweg ist.

Mit anderen Worten kann die Kopplungseinheit dafür sorgen, dass das Tragelement bei dem Verbringen desselben von dem ausgefahrenen Zustand in den eingefahrenen Zustand weiter in den Innenraum hineingefahren wird, als das Auslöseelement bei einem Überschlag des geschützten Fahrzeugs in das Führungselement des Auslöseelements hineingedrückt wird. Hierzu kann mit Hilfe der Kopplungseinheit ein geeignetes Übersetzungsverhältnis verwirklicht werden.

Die Kopplungseinheit kann beispielsweise ein Übersetzungsverhältnis von 1:1 aufweisen. In diesem Fall kann mit Hilfe der Kopplungseinheit beispielsweise ein Auslöseelementverfahrweg des Auslöseelements entgegen der y-Richtung von 10 cm in einen Tragelementverfahrweg des Tragelements entgegen der y-Richtung von 10 cm umgesetzt werden. Für den Fall, dass die Kopplungseinheit ein beispielhaftes Übersetzungsverhältnis von 1:2 aufweist, wird dementsprechend der Auslöseelementverfahrweg des Auslöseelements von 10 cm in einen Tragelementverfahrweg des Tragelements von 20 cm umgesetzt. Das Übersetzungsverhältnis kann grundsätzlich beliebig gewählt werden.

Alternativ kann mit Hilfe der Kopplungseinheit auch eine Untersetzung zwischen dem Auslöseelement und dem Tragelement verwirklicht werden. In diesem Fall ist bei dem Auslösen des Überrollschutzsystems der Tragelementverfahrweg des Tragelements kleiner als der Auslöseelementverfahrweg des Auslöseelements. Das Auslöseelement und das Tragelement können sich bei dem Auslösen des Überrollschutzsystems gleichsinnig bewegen. Das heißt beispielsweise, dass sich sowohl das Auslöseelement als auch das Tragelement bei dem Auslösen des Überrollschutzsystems entgegen der y-Richtung bewegen können.

Gemäß einer Ausführungsform ist das Auslöseelement von einem ausgefahrenen Zustand in einen eingefahrenen Zustand verbringbar, wobei das Auslöseelement in dem ausgefahrenen Zustand weiter über eine Außenseite des geschützten Fahrzeugs herausragt als in dem eingefahrenen Zustand.

Wie zuvor erwähnt, ragt das Auslöseelement in dem ausgefahrenen Zustand insbesondere über die Außenseite der Wandung des geschützten Fahrzeugs oder der geschützten Fahrzeugzelle heraus. Bei einem Überschlag des geschützten Fahrzeugs wird das Auslöseelement nun von dem ausgefahrenen Zustand in den eingefahrenen Zustand verbracht. Hierbei wird das Auslöseelement beispielsweise in ein wie zuvor erwähntes Führungselement hineingedrückt. Das Auslöseelement und das Führungselement können einen Aktor des Überrollschutzsystems bilden. Der Aktor kann mit der Kopplungseinheit wirkverbunden sein. Beispielsweise ist der Aktor mit Hilfe der Kopplungseinheit mit dem Tragelement gekoppelt.

Gemäß einer weiteren Ausführungsform koppelt die Kopplungseinheit das Auslöseelement derart mit dem Tragelement, dass die Kopplungseinheit das Tragelement von dem ausgefahrenen Zustand in den eingefahrenen Zustand verbringt, wenn sich das Auslöseelement von dem ausgefahrenen Zustand in den eingefahrenen Zustand bewegt.

Demgemäß bewegen sich das Auslöseelement und das Tragelement bevorzugt gleichsinnig. Das heißt insbesondere, dass sich das Auslöseelement und das Tragelement bei dem Auslösen des Überrollschutzsystems beide entgegen der y-Richtung bewegen können. Dabei wird das Auslöseelement in das diesem zugeordnete Führungselement hineingeschoben, und das Tragelement wird weiter in den Innenraum des geschützten Fahrzeugs oder der geschützten Fahrzeugzelle hineinbewegt.

Gemäß einer weiteren Ausführungsform koppelt die Kopplungseinheit das Auslöseelement mechanisch mit dem Tragelement.

Hierzu kann die Kopplungseinheit beispielsweise unterschiedliche Hebel, Hebelarme, Zahnräder, Getriebe oder andere geeignete Maschinenelemente aufweisen. Beispielsweise koppelt die Kopplungseinheit das Auslöseelement direkt mit dem Tragelement. In diesem Fall ist ein wie zuvor erwähntes Übersetzungsverhältnis der Kopplungseinheit von 1:1 gewählt. Beispielsweise kann die Kopplungseinheit als eine zwischen dem Auslöseelement und dem Tragelement vorgesehene Verbindung, beispielsweise im einfachsten Fall in Form einer Verschraubung oder Verschweißung, ausgebildet sein. Wie zuvor erwähnt, kann die Kopplungseinheit jedoch auch elektronisch, insbesondere elektromechanisch, fungieren. Dem Tragelement kann eine wie zuvor erwähnte Verstelleinheit zum Verstellen einer Höhenposition des Tragelements zugeordnet sein. Das Überrollschutzsystem kann eine Sensorik und eine mit der Sensorik wirkverbundene Regel- und Steuereinheit aufweisen, welche mit der Verstelleinheit gekoppelt ist. Die Regel- und Steuereinheit kann ein fahrzeuginternes System, wie beispielsweise ein CAN-Knoten (Engl.: Controller Area Network), oder ein beliebiges Steuergerät sein.

Die Regel- und Steuereinheit kann zur Datenauswertung und zur Weitergabe von Steuersignalen an die Verstelleinheit und/oder an die Kopplungseinheit dienen. Die Regel- und Steuereinheit kann Sensordaten des zuvor erwähnten Aktors, insbesondere eines an dem Aktor vorgesehenen Sensors, erfassen und auswerten. Ermittelt die Regel- und Steuereinheit nun, dass sich das Auslöseelement von dem ausgefahrenen Zustand in den eingefahrenen Zustand bewegt, steuert die Regel- und Steuereinheit die Verstelleinheit derart an, dass diese das Tragelement von dem ausgefahrenen Zustand in den eingefahrenen Zustand verbringt und das Besatzungsmitglied somit vollständig in den Innenraum hineinzieht. Die Kopplungseinheit wird in diesem Fall dadurch verwirklich, dass die Regel- und Steuereinheit die Verstelleinheit basierend auf Sensorsignalen der Sensorik derart ansteuert, dass das Tragelement in den eingefahrenen Zustand verbracht wird. In diesem Fall ist nicht zwingend eine direkte mechanische Kopplung zwischen dem Auslöseelement und der Verstelleinheit oder dem Tragelement vorgesehen. Zum Verbringen des Tragelements von dem ausgefahrenen Zustand in den eingefahrenen Zustand können beispielsweise pneumatische, hydraulische oder elektromechanische Wirkprinzipien oder eine Kombination dieser Wirkprinzipien eingesetzt werden. Beispielsweise kann das Tragelement mit Hilfe von vorgespannten Federelementen von dem ausgefahrenen Zustand in den eingefahrenen Zustand verbracht werden. Ferner kann dieses Einziehen des Tragelements auch mit Hilfe eines hydraulischen, pneumatischen oder hydropneumatischen Zylinders erfolgen. Außerdem kann das Tragelement mit Hilfe eines Elektromotors oder eines Gasgenerators, insbesondere eines pyrotechnischen Gasgenerators, von dem ausgefahrenen Zustand in den eingefahrenen Zustand verbracht werden.

Gemäß einer weiteren Ausführungsform weist das Überrollschutzsystem einen Auslöseaufbau zum Auslösen des Überrollschutzsystems auf, wobei der Auslöseaufbau mit dem Auslöseelement gekoppelt ist.

Insbesondere ragt der Auslöseaufbau über die Außenseite des geschützten Fahrzeugs oder der geschützten Fahrzeugzelle hinaus. Der Auslöseaufbau kommt bei einem Überschlag des geschützten Fahrzeugs mit dem Untergrund in Kontakt, wodurch mit Hilfe des Auslöseaufbaus das Auslöseelement betätigt wird. Der Auslöseaufbau kann käfigförmig sein. Der Auslöseaufbau kann daher auch als Auslösekäfig bezeichnet werden. Der Auslöseaufbau kann eine Doppelfunktion aufweisen. Neben dem Auslösen des Überrollschutzsystems kann der Auslöseaufbau auch als Drahtschutzsystem (Engl.: Wire Strike Protection System, WSPS) fungieren. Geraten beispielsweise über eine Fahrbahn gespannte Seile in Kontakt mit dem Auslöseaufbau, so leitet der Auslöseaufbau zunächst die Seile nach oben ab, wobei gleichzeitig das Überrollschutzsystem ausgelöst wird und das Tragelement von dem ausgefahrenen Zustand in den eingefahrenen Zustand verbracht wird. Das Auslöseelement kann mit Hilfe eines Kopplungselements, beispielsweise in Form eines Gelenks, mit dem Auslöseaufbau gekoppelt sein.

Gemäß einer weiteren Ausführungsform ist der Auslöseaufbau um eine Drehachse schwenkbar an dem geschützten Fahrzeug montierbar, wobei der Auslöseaufbau um die Drehachse von einem ausgeklappten Zustand in einen eingeklappten Zustand schwenkbar ist.

Die Drehachse verläuft vorzugsweise entlang der z-Richtung. Das heißt insbesondere, dass die Drehachse senkrecht zu der Fahrtrichtung des geschützten Fahrzeugs angeordnet ist. An der Wandung des geschützten Fahrzeugs, insbesondere an der Außenseite der Wandung, können Lagerböcke angebracht sein, an welchen der Auslöseaufbau um die Drehachse drehbar gelagert ist. Beispielsweise sind die Lagerböcke auf die Außenseite der Wandung aufgeschweißt.

Gemäß einer weiteren Ausführungsform ist der Auslöseaufbau mit Hilfe des Auslöseelements und der Kopplungseinheit derart mit dem Tragelement gekoppelt, dass die Kopplungseinheit das Tragelement von dem ausgefahrenen Zustand in den eingefahrenen Zustand verbringt, wenn sich der Auslöseaufbau von dem ausgeklappten Zustand in den eingeklappten Zustand bewegt.

Zum Verbringen des Auslöseaufbaus von dem ausgeklappten Zustand in den eingeklappten Zustand verschwenkt der Auslöseaufbau um die zuvor erwähnte Drehachse. In dem eingeklappten Zustand kann der Auslöseaufbau an der Außenseite der Wandung des geschützten Fahrzeugs oder der geschützten Fahrzeugzelle aufliegen. Wie zuvor erwähnt, ist das Auslöseelement bevorzugt mit Hilfe eines Kopplungselements mit dem Auslöseaufbau gekoppelt. Das Kopplungselement kann beispielsweise ein an dem Auslöseelement angebrachtes Gelenk sein. Hierdurch ist es möglich, dass der Auslöseaufbau gegenüber dem Auslöseelement verschwenkt werden kann.

Gemäß einer weiteren Ausführungsform weist der Auslöseaufbau einen um die Drehachse drehbar gelagerten Auslösebügel auf, der mit dem Auslöseelement gekoppelt ist.

Der Auslösebügel ist insbesondere bogenförmig oder bügelförmig gekrümmt. Beispielsweise kann der Auslösebügel mit Hilfe des zuvor erwähnten Kopplungselements mit dem Auslöseelement wirkverbunden sein. Der Auslösebügel kann sich somit gegenüber dem Auslöseelement verschwenken, wobei das Verschwenken mit Hilfe des Kopplungselements ermöglicht wird. Das Kopplungselement kann im einfachsten Fall beispielsweise ein wie zuvor erwähntes Gelenk sein.

Gemäß einer weiteren Ausführungsform weist das Überrollschutzsystem einen ersten Auslösebügel und einen beabstandet von dem ersten Auslösebügel angeordneten zweiten Auslösebügel auf, wobei der erste Auslösebügel und der zweite Auslösebügel bevorzugt parallel zueinander angeordnet sind.

Insbesondere sind der erste Auslösebügel und der zweite Auslösebügel entlang der Fahrtrichtung des geschützten Fahrzeugs betrachtet beidseits einer wie zuvor erwähnten Lukenöffnung angeordnet. Insbesondere weist der Auslöseaufbau die beiden entlang der z-Richtung voneinander beabstandet angeordneten Auslösebügel auf, welche bevorzugt identisch aufgebaut sind. Alternativ kann auch genau ein Auslösebügel vorgesehen sein. Bezüglich der Fahrtrichtung betrachtet sind der erste Auslösebügel und der zweite Auslösebügel bevorzugt rechts und links der Lukenöffnung angeordnet.

Gemäß einer weiteren Ausführungsform weist das Überrollschutzsystem ein senkrecht zu dem ersten Auslösebügel und dem zweiten Auslösebügel orientiertes Verbindungselement auf, das den ersten Auslösebügel mit dem zweiten Auslösebügel verbindet.

Unter "senkrecht" ist vorliegend insbesondere ein Winkel von 90° ± 10°, bevorzugt von 90° ± 5°, weiter bevorzugt von 90° ± 3°, weiter bevorzugt von 90° ± 1°, weiter bevorzugt von genau 90°, zu verstehen. Das Verbindungselement kann ein Stahlrohr sein. Das Verbindungselement ist bevorzugt sowohl fest mit dem ersten Auslösebügel als auch fest mit dem zweiten Auslösebügel verbunden. Beispielsweise kann das Verbindungselement mit den Auslösebügeln verschraubt oder verschweißt sein. Aufgrund der Verbindung der Auslösebügel mit Hilfe des Verbindungselements miteinander kann eine Bewegung des ersten Auslösebügels auf den zweiten Auslösebügel und umgekehrt übertragen werden. Ferner kann das Verbindungselement auch zur Lagerung des Auslöseaufbaus an den zuvor erwähnten Lagerböcken dienen. In diesem Fall verdreht sich das Verbindungselement bei dem Verbringen des Auslöseaufbaus von dem ausgeklappten Zustand in den eingeklappten Zustand um die zuvor erwähnte Drehachse. Es können mehrere Verbindungselemente vorgesehen sein. In diesem Fall sind die Verbindungselemente jedoch derart ausgestaltet oder angeordnet, dass ein Öffnen oder Schließen eines jeweiligen Lukendeckels der Lukenöffnung nicht behindert wird.

Gemäß einer weiteren Ausführungsform weist der Auslösebügel einen Mittelabschnitt und endseitig an dem Mittelabschnitt angebrachte Seitenabschnitte auf, wobei die Seitenabschnitte schräg zu dem Mittelabschnitt orientiert sind.

Beispielsweise sind ein erster Seitenabschnitt und ein zweiter Seitenabschnitt vorgesehen, zwischen denen der Mittelabschnitt angeordnet ist. Insbesondere sind die beiden ersten Seitenabschnitte der beiden Auslösebügel mit Hilfe des Verbindungselements miteinander verbunden. Demgemäß kann der Auslöseaufbau mit Hilfe der beiden ersten Seitenabschnitte um die Drehachse verschwenkbar an der Wandung gelagert sein. In dem eingeklappten Zustand des Auslöseaufbaus kann demgemäß jeweils der zweite Seitenabschnitt der Auslösebügel in Kontakt mit der Außenseite der Wandung sein.

Gemäß einer weiteren Ausführungsform weist das Überrollschutzsystem einen Hublukendeckel zum Auslösen des Überrollschutzsystems auf, wobei der Hublukendeckel mit dem Auslöseelement gekoppelt ist.

Unter einem "Hublukendeckel" ist vorliegend ein Lukendeckel zu verstehen, der zum Öffnen und Verschließen einer wie zuvor erwähnten Lukenöffnung beispielsweise entlang und entgegen der y-Richtung oder der Hochrichtung des geschützten Fahrzeugs verfahren werden kann.

Gemäß einer weiteren Ausführungsform ist der Hublukendeckel verlagerbar an dem geschützten Fahrzeug montierbar, wobei der Hublukendeckel von einem geöffneten Zustand, in dem der Hublukendeckel eine dem Hublukendeckel zugeordnete Lukenöffnung freigibt, in einen geschlossenen Zustand, in dem der Hublukendeckel die Lukenöffnung verschließt, verbringbar.

Insbesondere ist der Hublukendeckel linear verlagerbar an dem geschützten Fahrzeug montierbar. In dem geöffneten Zustand kann das Besatzungsmitglied über Luke fahren. In dem geschlossenen Zustand kann der Hublukendeckel zumindest abschnittsweise an der Außenseite der Wandung des geschützten Fahrzeugs oder der geschützten Fahrzeugzelle anliegen.

Gemäß einer weiteren Ausführungsform ist der Hublukendeckel mit Hilfe des Auslöseelements und der Kopplungseinheit derart mit dem Tragelement gekoppelt, dass die Kopplungseinheit das Tragelement von dem ausgefahrenen Zustand in den eingefahrenen Zustand verbringt, wenn sich der Hublukendeckel von dem geöffneten Zustand in den geschlossenen Zustand bewegt.

Beispielsweise kann der Hublukendeckel hierzu fest mit dem Auslöseelement verbunden sein. Der Hublukendeckel kann insbesondere mit dem Auslöseelement verschweißt und/oder verschraubt sein. Hierzu kann endseitig an dem Auslöseelement ein Befestigungsflansch zum Befestigen des Auslöseelements an dem Hublukendeckel vorgesehen sein. Durch ein Verbringen des Hublukendeckels von dem geöffneten Zustand in den geschlossenen Zustand wird das Auslöseelement von dem ausgefahrenen Zustand in den eingefahrenen Zustand verbracht, wodurch wiederum das Tragelement ebenfalls von seinem ausgefahrenen Zustand in seinen eingefahrenen Zustand verbracht wird. Dem Hublukendeckel kann genau ein Auslöseelement zugeordnet sein. Es können jedoch auch mehrere Auslöseelemente oder beliebige andere Führungselemente zum, insbesondere linearen, Führen des Hublukendeckels entlang und entgegen der y-Richtung vorgesehen sein.

Ferner wird ein geschütztes Fahrzeug mit zumindest einem derartigen Überrollschutzsystem vorgeschlagen.

Das geschützte Fahrzeug kann mehrere derartige Überrollschutzsysteme aufweisen. Beispielsweise kann das geschützte Fahrzeug mehrere Lukenöffnungen aufweisen, wobei jeder Lukenöffnung ein derartiges Überrollschutzsystem zugeordnet sein kann. Es muss jedoch nicht zwingend jeder Lukenöffnung ein derartiges Überrollschutzsystem zugeordnet sein. Das geschützte Fahrzeug ist insbesondere ein militärisches Fahrzeug. Das geschützte Fahrzeug kann daher auch als Militärfahrzeug bezeichnet werden. Insbesondere ist das geschützte Fahrzeug ein gepanzertes Transportfahrzeug. Das geschützte Fahrzeug kann beispielsweise auch ein Schützenpanzer, ein Kampfpanzer, ein Bergepanzer, ein Minenräumpanzer, ein Spürpanzer oder dergleichen sein. Das geschützte Fahrzeug kann insbesondere auch ein Radpanzer sein. Das geschützte Fahrzeug kann als geschütztes Militärfahrzeug bezeichnet werden. Wie zuvor erwähnt, umfasst das geschützte Fahrzeug die geschützte Fahrzeugzelle. Die geschützte Fahrzeugzelle ist bevorzugt in der Art eines austauschbaren Missionsmoduls gestaltet.

Besonders bevorzugt umfasst das geschützte Fahrzeug ein Überrollschutzsystem mit einem Auslöseelement zum Auslösen des Überrollschutzsystems, einem Tragelement zum Tragen eines Besatzungsmitglieds und einer Kopplungseinheit, die das Auslöseelement mit dem Tragelement koppelt, um das Tragelement bei einem Überschlag des geschützten Fahrzeugs von einem ausgefahrenen Zustand, in dem sich das Besatzungsmitglied teilweise innerhalb und teilweise außerhalb des geschützten Fahrzeugs aufhält, in einen eingefahrenen Zustand, in dem sich das Besatzungsmitglied vollständig innerhalb des geschützten Fahrzeugs aufhält, zu verbringen, so dass das Besatzungsmitglied während des Überschlags des geschützten Fahrzeugs geschützt ist.

Außerdem wird eine geschützte Fahrzeugzelle für ein derartiges geschütztes Fahrzeug vorgeschlagen. Die geschützte Fahrzeugzelle umfasst ein Überrollschutzsystem mit einem Auslöseelement zum Auslösen des Überrollschutzsystems, einem Tragelement zum Tragen eines Besatzungsmitglieds und eine Kopplungseinheit, die das Auslöseelement mit dem Tragelement koppelt, um das Tragelement bei einem Überschlag der geschützten Fahrzeugzelle von einem ausgefahrenen Zustand, in dem sich das Besatzungsmitglied teilweise innerhalb und teilweise außerhalb der geschützten Fahrzeugzelle aufhält, in einen eingefahrenen Zustand, in dem sich das Besatzungsmitglied vollständig innerhalb der geschützten Fahrzeugzelle aufhält, zu verbringen, so dass das Besatzungsmitglied während des Überschlags der geschützten Fahrzeugzelle geschützt ist.

Die für das vorgeschlagene Überrollschutzsystem beschriebenen Ausführungsformen und Merkmale gelten für das vorgeschlagene geschützte Fahrzeug entsprechend und umgekehrt.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl von Elementen gegeben ist. Vielmehr sind zahlenmäßige Abweichungen nach oben und nach unten möglich, soweit nichts Gegenteiliges angegeben ist.

Weitere mögliche Implementierungen des Überrollschutzsystems und/oder des geschützten Fahrzeugs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Überrollschutzsystems und/oder des geschützten Fahrzeugs hinzufügen.

Weitere vorteilhafte Ausgestaltungen und Aspekte des Überrollschutzsystems und/oder des geschützten Fahrzeugs sind Gegenstand der Unteransprüche sowie der im Folgenden beschriebenen Ausführungsbeispiele des Überrollschutzsystems und/oder des geschützten Fahrzeugs. Im Weiteren werden das Überrollschutzsystem und/oder das geschützte Fahrzeug anhand von bevorzugten Ausführungsformen unter Bezugnahme auf die beigelegten Figuren näher erläutert.
- Fig. 1: zeigt eine schematische Seitenansicht einer Ausführungsform eines geschützten Fahrzeugs;
- Fig. 2: zeigt eine schematische Aufsicht einer Ausführungsform eines Überrollschutzsystems für das geschützte Fahrzeug gemäß Fig. 1;
- Fig. 3: zeigt eine schematische Schnittansicht des Überrollschutzsystems gemäß der Schnittlinie III-III der Fig. 2;
- Fig. 4: zeigt eine weitere schematische Schnittansicht des Überrollschutzsystems gemäß der Schnittlinie III-III der Fig. 2;
- Fig. 5: zeigt eine schematische Aufsicht einer weiteren Ausführungsform eines Überrollschutzsystems für das geschützte Fahrzeug gemäß Fig. 1;
- Fig. 6: zeigt eine schematische Schnittansicht des Überrollschutzsystems gemäß der Schnittlinie VI-VI der Fig. 5;
- Fig. 7: zeigt eine weitere schematische Schnittansicht des Überrollschutzsystems gemäß der Schnittlinie VI-VI der Fig. 5;
- Fig. 8: zeigt eine schematische Aufsicht einer weiteren Ausführungsform eines Überrollschutzsystems für das geschützte Fahrzeug gemäß Fig. 1;
- Fig. 9: zeigt eine schematische Schnittansicht des Überrollschutzsystems gemäß der Schnittlinie IX-IX der Fig. 8; und
- Fig. 10: zeigt eine weitere schematische Schnittansicht des Überrollschutzsystems gemäß der Schnittlinie IX-IX der Fig. 8.

In den Figuren sind gleiche oder funktionsgleiche Elemente mit denselben Bezugszeichen versehen worden, sofern nichts anderes angegeben ist.

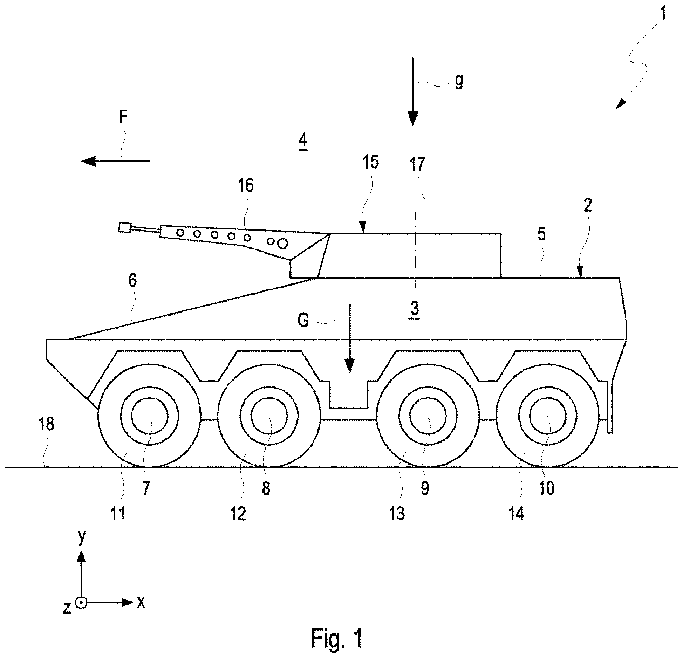

Die Fig. 1 zeigt eine schematische Seitenansicht einer Ausführungsform eines geschützten Fahrzeugs 1.

Das geschützte Fahrzeug 1 wird nachfolgend lediglich als Fahrzeug bezeichnet. Das Fahrzeug 1 kann ein militärisches Fahrzeug, insbesondere ein militärisches Nutzfahrzeug, sein. Das Fahrzeug 1 kann daher auch als Militärfahrzeug oder als Militärnutzfahrzeug bezeichnet werden. Insbesondere ist das Fahrzeug 1 ein gepanzertes Transportfahrzeug. Das Fahrzeug 1 kann beispielsweise auch ein Schützenpanzer, ein Kampfpanzer, ein Bergepanzer, ein Minenräumpanzer, ein Spürpanzer oder dergleichen sein. Das Fahrzeug 1 kann auch ein Radpanzer sein.

Das Fahrzeug 1 umfasst eine geschützte Fahrzeugzelle 2. Im Folgenden wird die geschützte Fahrzeugzelle 2 lediglich als Fahrzeugzelle bezeichnet. Die Fahrzeugzelle 2 kann eine Fahrzeugwanne sein und daher auch als solche bezeichnet werden. Die Begriffe "Fahrzeugzelle" und "Fahrzeugwanne" sind daher beliebig gegeneinander tauschbar. Das Fahrzeug 1 kann bewaffnet oder unbewaffnet sein. Das Fahrzeug 1 kann ein Fahrzeuggewicht von über 20 Tonnen aufweisen.

Die Fahrzeugzelle 2 ist gepanzert. Die Fahrzeugzelle 2 ist insbesondere gegen Beschuss, Sprengfallen, unkonventionelle Spreng- oder Brandvorrichtungen (USBV, Engl.: Improvised Explosive Devices, IED), Minen oder dergleichen geschützt. Die Fahrzeugzelle 2 umschließt einen Fahrzeuginnenraum oder Innenraum 3, in dem sich eine Besatzung des Fahrzeugs 1 aufhalten kann. Der Innenraum 3 ist über nicht gezeigte Türen und/oder Luken von einer Umgebung 4 des Fahrzeugs 1 her zugänglich. Der Innenraum 3 kann in mehrere Abschnitte oder Räume unterteilt sein, die voneinander getrennt sein können. Beispielsweise kann der Innenraum 3 in einen Maschinenraum, einen Besatzungsraum und/oder in einen Fahrzeugführerraum unterteilt sein. Dies ist jedoch nicht zwingend erforderlich.

Die Fahrzeugzelle 2 kann ferner zumindest teilweise oder vollständig modular ausgetauscht werden. In diesem Fall kann das Fahrzeug 1 unterschiedliche Missionsmodule, Missionskits oder Rüstsätze aufweisen, die beliebig austauschbar sind. Als Beispiel für ein derartiges Missionsmodul kann ein Sanitätsmodul genannt werden. Dieser zuvor erläuterte modulare Aufbau ist jedoch beliebig. Die Fahrzeugzelle 2 umfasst beispielsweise ein Dach 5 und eine geneigt zu dem Dach 5 angeordnete Vorderwand 6.

Das Fahrzeug 1 kann ein Radfahrzeug oder ein Kettenfahrzeug sein. Nachfolgend wird jedoch davon ausgegangen, dass das Fahrzeug 1 ein Radfahrzeug ist. Das Fahrzeug 1 umfasst mehrere Radachsen 7, 8, 9, 10, an denen Räder 11, 12, 13, 14 vorgesehen sind. Beispielsweise sind vier Radachsen 7, 8, 9, 10 mit acht Rädern 11, 12, 13, 14 vorgesehen. Es können jedoch auch weniger oder mehr als vier Radachsen 7, 8, 9, 10 vorgesehen sein. Unter einer "Radachse" ist vorliegend eine Achse zu verstehen, um die sich das jeweilige Rad 11, 12, 13, 14 dreht.

Die Anzahl der Radachsen 7, 8, 9, 10 ist grundsätzlich beliebig. Beispielsweise können vier Radachsen 7, 8, 9, 10 oder drei Radachsen 7, 8, 9, 10 vorgesehen sein. Jeder Radachse 7, 8, 9, 10 sind zwei Räder 11, 12, 13, 14 zugeordnet. Zumindest die Räder 11, 12 sind lenkbar. Bevorzugt sind jedoch alle Räder 11, 12, 13, 14 lenkbar. Vorzugsweise umfasst das Fahrzeug 1 einen Allradantrieb. Das heißt, alle Radachsen 7, 8, 9, 10 sind angetrieben.

Das Fahrzeug 1 kann einen Turm 15 mit einer Bewaffnung 16 aufweisen. Der Turm 15 ist drehbar an der Fahrzeugzelle 2 gelagert. Der Turm 15 kann eine elektrische oder hydraulische Antriebseinheit umfassen, um den Turm 15 um eine Drehachse 17 relativ zu der Fahrzeugzelle 2 zu drehen. Der Turm 15 kann jedoch auch manuell betrieben werden, falls die Antriebseinheit ausfällt. Die Bewaffnung 16 kann eine Maschinenkanone oder dergleichen sein. Die Bewaffnung 16 kann eine Primärbewaffnung oder Hauptbewaffnung sein. Es kann zusätzlich eine Sekundärbewaffnung, beispielsweise in Form eines Maschinengewehrs, vorgesehen sein.

Dem Fahrzeug 1 ist ein Koordinatensystem mit einer ersten Raumrichtung, Längsrichtung oder x-Richtung x, einer zweiten Raumrichtung, Hochrichtung oder y-Richtung y und einer dritten Raumrichtung, Querrichtung oder z-Richtung z zugeordnet. Die Richtungen x, y, z sind senkrecht zueinander orientiert. Eine Bewegung des Fahrzeugs 1 um die x-Richtung x kann als Rollen oder Rollbewegung bezeichnet werden. Eine Bewegung des Fahrzeugs 1 um die y-Richtung y kann als Gieren oder Gierbewegung bezeichnet werden. Eine Bewegung des Fahrzeugs 1 um die z-Richtung z kann als Nicken oder Nickbewegung bezeichnet werden.

Eine Schwerkraftrichtung g kann im Wesentlichen entgegen der y-Richtung y orientiert sein. Eine Gewichtskraft G des Fahrzeugs 1 wirkt entlang der Schwerkraftrichtung g. Das Fahrzeug 1 kann sich entlang einer Fahrtrichtung F und entgegen der Fahrtrichtung F auf einem Boden oder Untergrund 18 fortbewegen. Die Fahrtrichtung F kann entgegen der x-Richtung x orientiert sein. Der Untergrund 18 kann eine Fahrbahn oder ein beliebiges Gelände sein.

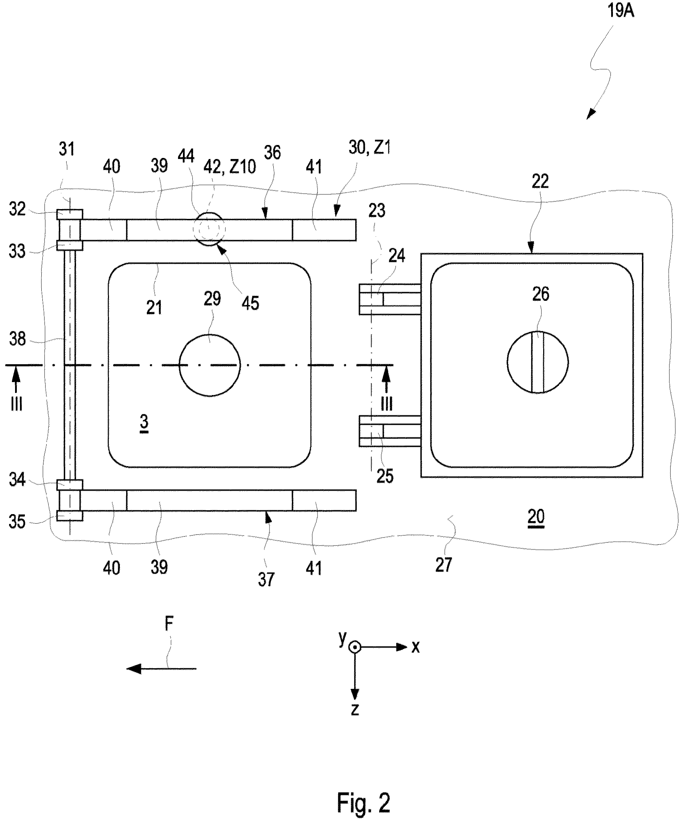

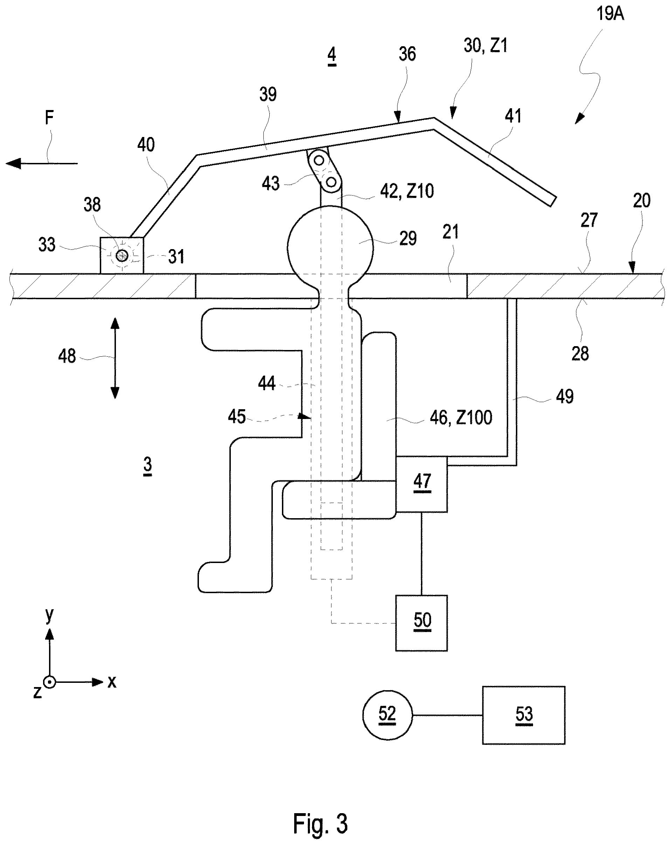

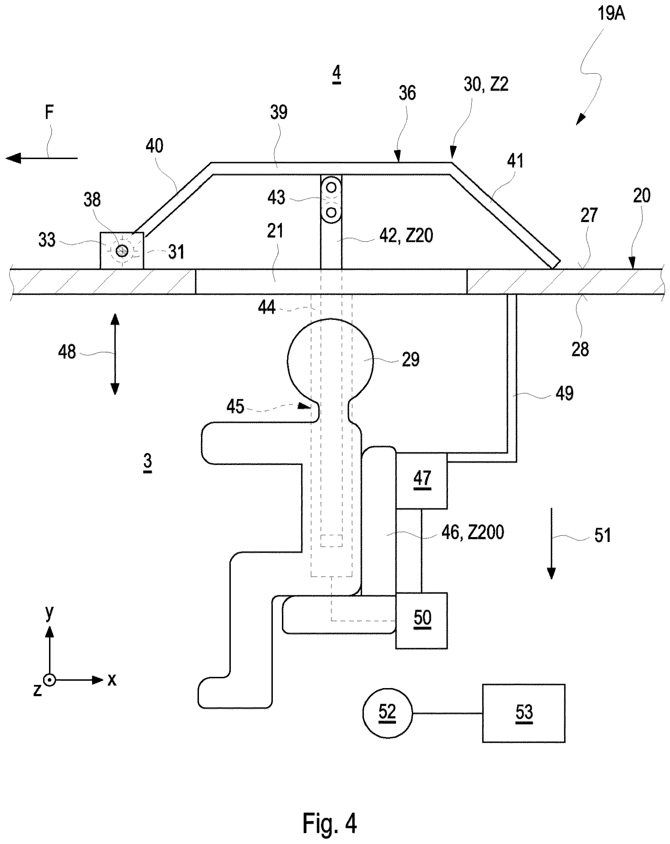

Die Fig. 2 zeigt eine schematische Aufsicht einer Ausführungsform eines Überrollschutzsystems 19A für das Fahrzeug 1. Die Fig. 3 zeigt eine schematische Schnittansicht des Überrollschutzsystems 19A. Die Fig. 4 zeigt eine weitere schematische Schnittansicht des Überrollschutzsystems 19A. Nachfolgend wird auf die Fig. 2 bis 4 gleichzeitig Bezug genommen.

An einer Wandung 20 der Fahrzeugzelle 2, insbesondere an dem Dach 5 oder an der Vorderwand 6, ist eine Lukenöffnung 21 vorgesehen, über welche der Innenraum 3 in die Umgebung 4 verlassen oder der Innenraum 3 von der Umgebung 4 aus betreten werden kann. Die Wandung 20 kann beispielsweise Teil des Dachs 5 oder der Vorderwand 6 sein. Die Wandung 20 kann horizontal verlaufen. Die Wandung 20 kann jedoch auch schräg oder vertikal angeordnet sein.

Das Fahrzeug 1 kann beliebig viele Lukenöffnungen 21 aufweisen. Beispielsweise kann auch an dem Turm 15 eine derartige Lukenöffnung 21 vorgesehen sein. Demgemäß kann die Wandung 20 auch Teil des Turms 15 sein. Die Lukenöffnung 21 kann eine beliebige Geometrie aufweisen. Beispielsweise kann die Lukenöffnung 21 rechteckförmig oder rund sein. Entlang der z-Richtung z betrachtet kann die Lukenöffnung 21 links oder rechts von dem Turm 15 platziert sein.

Der Lukenöffnung 21 ist ein Lukendeckel 22 zugeordnet, mit dessen Hilfe die Lukenöffnung 21 verschlossen werden kann. Der Lukendeckel 22 ist in den Fig. 3 und 4 nicht gezeigt. Der Lukendeckel 22 kann ein Klapplukendeckel, ein Schiebelukendeckel, ein Hublukendeckel oder ein Deckel mit einer kombinierten translatorischen und rotatorischen Öffnungs- und Schließbewegung sein. Nachfolgend wird davon ausgegangen, dass der Lukendeckel 22 ein Klapplukendeckel ist. Das heißt, dass der Lukendeckel 22 um eine Drehachse 23 drehbar an der Wandung 20 gelagert ist. Die Drehachse 23 kann parallel zu der z-Richtung z verlaufen.

Dabei kann der Lukendeckel 22 von einer nicht gezeigten geschlossenen Position in eine in der Fig. 2 gezeigte geöffnete Position verbracht werden. Der Lukendeckel 22 kann in seiner geöffneten Position verriegelt werden, so dass sich der Lukendeckel 22 auch bei einem Überschlag des Fahrzeugs 1 nicht selbsttätig schließen kann.

Der Lukendeckel 22 ist mit Hilfe von Scharnieren 24, 25 an der Wandung 20 angeschlagen. In der geöffneten Position kann der Lukendeckel 22 auf der Wandung 20 aufliegen. Dies ist jedoch nicht zwingend erforderlich. Der Lukendeckel 22 kann in der geöffneten Position auch nicht an der Wandung 20 anliegen. Der Lukendeckel 22 kann eine Verriegelungseinheit 26 zum Verriegeln und Entriegeln des Lukendeckels 22 aufweisen. Die Wandung 20 weist eine der Umgebung 4 zugewandte Außenseite 27 auf. Eine der Außenseite 27 abgewandte Innenseite 28 der Wandung 20 ist dem Innenraum 3 zugewandt.

Bei einem derartigen Fahrzeug 1 kann es unter anderem aufgrund der unübersichtlichen Fahrzeuggeometrie erforderlich sein, dass einzelne Besatzungsmitglieder 29 über Luke fahren. Dies kann stehend oder sitzend erfolgen. "Über Luke" heißt dabei, dass zumindest der Kopf des jeweiligen Besatzungsmitglieds 29 aus der Lukenöffnung 21 in die Umgebung 4 hineinragt. Dies kann zum Beispiel für die Unterstützung des Fahrers durch den Kommandanten oder für eine bessere Führbarkeit des Fahrzeugs 1 im zivilen Straßenverkehr erforderlich sein. Dieser Umstand kann dazu führen, dass im Falle eines Überschlags des Fahrzeugs 1 das über Luke fahrende Besatzungsmitglied 29 tödlichen Gefahren ausgesetzt ist. Im schlimmsten Fall kann es dazu kommen, dass das Besatzungsmitglied 29 durch das Fahrzeug 1 zerquetscht und somit tödlich verletzt wird.

Um die vorgenannte Problematik zu entschärfen, ist das nachfolgend erläuterte Überrollschutzsystem 19A vorgesehen. Jeder Lukenöffnung 21 des Fahrzeugs 1 kann ein derartiges Überrollschutzsystem 19A zugeordnet sein. Je Lukenöffnung 21 kann genau ein Überrollschutzsystem 19A vorgesehen sein. Das Überrollschutzsystem 19A ist insbesondere auch für Fahrzeuggewichte von über 20 Tonnen geeignet.

Das Überrollschutzsystem 19A umfasst einen Auslöseaufbau 30 zum Auslösen des Überrollschutzsystems 19A. Der Auslöseaufbau 30 kann käfigförmig sein. Daher kann der Auslöseaufbau 30 auch als Auslösekäfig bezeichnet werden. Der Auslöseaufbau 30 ist um eine Drehachse 31 drehbar an der Wandung 20 gelagert. Hierzu können an der Wandung 20 Lagerböcke 32, 33, 34, 35 angebracht, beispielsweise angeschweißt sein, an welchen der Auslöseaufbau 30 um die Drehachse 31 verschwenkbar gelagert ist. Der Auslöseaufbau 30 verhindert ein Verschwenken des Lukendeckels 22 nicht. Das heißt, dass der Lukendeckel 22 trotz des Auslöseaufbaus 30 geöffnet und geschlossen werden kann.

Der Auslöseaufbau 30 weist zwei entlang der z-Richtung z voneinander beabstandet angeordnete Auslösebügel 36, 37 auf. Die Auslösebügel 36, 37 sind bevorzugt identisch aufgebaut. Alternativ kann auch genau ein Auslösebügel 36, 37 vorgesehen sein. Nachfolgend wird jedoch davon ausgegangen, dass zwei Auslösebügel 36, 37 vorgesehen sind, die in der Orientierung der Fig. 2 oberhalb und unterhalb der Lukenöffnung 21 platziert sind. Es sind ein erster Auslösebügel 36 und ein zweiter Auslösebügel 37 vorgesehen.

Die Auslösebügel 36, 37 sind mit Hilfe eines Verbindungselements 38 fest miteinander verbunden. Das Verbindungselement 38 kann ein Stahlrohr sein. Das Verbindungselement 38 ist sowohl fest mit dem ersten Auslösebügel 36 als auch fest mit dem zweiten Auslösebügel 37 verbunden. Beispielsweise kann das Verbindungselement 38 mit den Auslösebügeln 36, 37 verschraubt oder verschweißt sein. Aufgrund der Verbindung der Auslösebügel 36, 37 mit Hilfe des Verbindungselements 38 miteinander, kann eine Bewegung des ersten Auslösebügels 36 auf den zweiten Auslösebügel 37 und umgekehrt übertragen werden. Das Verbindungselement 38 kann ferner auch zur Lagerung des Auslöseaufbaus 30 an den Lagerböcken 32, 33, 34, 35 dienen.

Das Verbindungselement 38 verläuft entlang der z-Richtung z. Die Auslösebügel 36, 37 verlaufen entlang der x-Richtung x. Somit ist das Verbindungselement 38 senkrecht zu den Auslösebügeln 36, 37 orientiert. Hierdurch ergibt sich die zuvor erwähnte käfigförmige Struktur des Auslöseaufbaus 30. Es können mehrere Verbindungselemente 38 vorgesehen sein. In diesem Fall sind die Verbindungselemente 38 jedoch derart ausgestaltet oder angeordnet, dass ein Öffnen und Schließen des Lukendeckels 22 nicht behindert wird.

Jeder Auslösebügel 36, 37 kann bügelförmig sein und einen Mittelabschnitt 39 und zwei seitlich an dem Mittelabschnitt 39 angebrachte und schräg zu diesem verlaufende Seitenabschnitte 40, 41 aufweisen. Die Seitenabschnitte 40, 41 sind optional. Die Auslösebügel 36, 37 können auch jeweils nur den Mittelabschnitt 39 aufweisen. In diesem Fall wird auf die Seitenabschnitte 40, 41 verzichtet.

Es sind jedoch bevorzugt ein erster Seitenabschnitt 40 und ein zweiter Seitenabschnitt 41 vorgesehen. Beispielsweise sind die beiden ersten Seitenabschnitte 40 der Auslösebügel 36, 37 mit Hilfe des Verbindungselement 38 miteinander verbunden. Demgemäß ist der Auslöseaufbau 30 mit Hilfe der beiden ersten Seitenabschnitte 40 um die Drehachse 31 verschwenkbar an der Wandung 20 gelagert.

Die Auslösebügel 36, 37 können jeweils aus einem Metallrohr, insbesondere aus einem Stahlrohr oder aus einem Aluminiumrohr, gefertigt sein. In diesem Fall können die Seitenabschnitte 40, 41 bezüglich des Mittelabschnitts 39 umgebogen sein. Die Auslösebügel 36, 37 können jedoch auch jeweils als Schweißkonstruktion ausgeführt sein. Demgemäß kann auch der gesamte Auslöseaufbau 30 eine Schweißkonstruktion sein. Die Auslösebügel 36, 37 und das Verbindungselement 38 können jedoch auch miteinander verschraubt sein.

Der Auslöseaufbau 30 kann von einem in den Fig. 2 und 3 gezeigten ausgeklappten Zustand Z1 in einen in der Fig. 4 gezeigten eingeklappten Zustand Z2 verbracht werden. Hierzu wird der Auslöseaufbau 30 um die Drehachse 31 verschwenkt. Der Auslöseaufbau 30 kann jedoch auch von dem eingeklappten Zustand Z2 wieder zurück in den ausgeklappten Zustand Z1 verbracht werden. In dem ausgeklappten Zustand Z1 haben die zweiten Seitenabschnitte 41 der Auslösebügel 36, 37 keinen Kontakt mit der Außenseite 27 der Wandung, wohingegen die zweiten Seitenabschnitte 41 in dem eingeklappten Zustand Z2 an der Außenseite 27 anliegen oder aufliegen können.

Das Überrollschutzsystem 19A weist ferner ein Auslöseelement 42 auf, das mit dem Auslöseaufbau 30 gekoppelt ist. Das Auslöseelement 42 kann stangenförmig sein. Das Auslöseelement 42 kann mit Hilfe eines Kopplungselements 43, beispielsweise in Form eines Gelenks, mit dem Auslöseaufbau 30, Insbesondere einem der Auslösebügel 36, 37 gekoppelt oder wirkverbunden. Beispielsweise kann das Auslöseelement 42 mit Hilfe des Kopplungselements 43 mit dem ersten Auslösebügel 36 gekoppelt sein.

Die Kopplung zwischen dem Auslöseelement 42 und dem Auslöseaufbau 30 ist insbesondere derart, dass eine Bewegung des Auslöseaufbaus 30, beispielsweise eine Bewegung des Auslöseaufbaus 30 von dem ausgeklappten Zustand Z1 in den eingeklappten Zustand Z2, in eine Bewegung des Auslöseelements 42 übertragen oder umgesetzt wird. Insbesondere kann das Auslöseelement 42 von einem in den Fig. 2 und 3 gezeigten ausgefahrenen Zustand Z10 in einen in der Fig. 4 gezeigten eingefahrenen Zustand Z20 verbracht werden.

Insbesondere wird das Auslöseelement 42 mit Hilfe eines Verbringens des Auslöseaufbaus 30 von dem ausgeklappten Zustand Z1 in den eingeklappten Zustand Z2 von dem ausgefahrenen Zustand Z 10 in den eingefahrenen Zustand Z20 verbracht. Der Auslöseaufbau 30 drückt das Auslöseelement 42 dabei entgegen der y-Richtung y nach unten, wodurch dieses von dem ausgefahrenen Zustand Z10 in den eingefahrenen Zustand Z20 verbracht wird.

Das Auslöseelement 42 kann in einem Führungselement 44 entlang und entgegen der y-Richtung y linear verschieblich gelagert sein. Das Führungselement 44 kann eine Führungshülse sein. Das Führungselement 44 kann mit einer tragenden Struktur des Fahrzeugs 1 oder der Fahrzeugzelle 2, beispielsweise in Form der Wandung 20, fest verbunden, insbesondere verschweißt oder verschraubt, sein. Das Auslöseelement 42 und das Führungselement 44 können einen Aktor 45 des Überrollschutzsystems 19A bilden. Mit Hilfe des Aktors 45 kann das Überrollschutzsystem 19A ausgelöst werden, wie nachfolgend noch beschrieben wird.

Weiterhin weist das Überrollschutzsystem 19A ein Tragelement 46 für das Besatzungsmitglied 29 auf. Das Tragelement 46 kann ein Sitz für das Besatzungsmitglied 29 sein. Demgemäß können vorliegend die Begriffe "Tragelement" und "Sitz" beliebig gegeneinander getauscht werden. Alternativ kann das Tragelement 46 auch eine Stehplattform für das Besatzungsmitglied 29 sein. Das Besatzungsmitglied 29 kann an einer derartigen Stehplattform festgeschnallt sein, so dass das Besatzungsmitglied 29 bei einem Überschlag des Fahrzeugs 1 nicht aus der Fahrzeugzelle 2 herausgeschleudert werden kann.

Nachfolgend wird jedoch davon ausgegangen, dass das Überrollschutzsystem 19A ein Tragelement 46 in Form eines Sitzes umfasst. Das Tragelement 46 kann an der Wandung 20 aufgehängt sein, wie nachfolgend noch erläutert wird. Das Besatzungsmitglied 29 ist an oder auf dem Tragelement 46 in Form eines Sitzes festgeschnallt, so dass das Besatzungsmitglied 29 auch in diesem Fall bei einem Überschlag des Fahrzeugs 1 nicht aus der Fahrzeugzelle 2 herausgeschleudert werden kann.

Dem Tragelement 46 ist eine Verstelleinheit 47 zugeordnet, mit deren Hilfe das Tragelement 46 entlang und entgegen der y-Richtung y bewegt werden kann, wie in den Fig. 3 und 4 mit Hilfe eines Doppelpfeils 48 angedeutet ist. Für den Fall, dass das Tragelement 46 ein Sitz ist, kann die Verstelleinheit 47 demgemäß als Sitzverstelleinheit bezeichnet werden. Demgemäß sind vorliegend die Begriffe "Verstelleinheit" und "Sitzverstelleinheit" gegeneinander tauschbar.

Die Verstelleinheit 47 kann beispielsweise hydraulisch oder pneumatisch angetrieben werden. Ferner kann die Verstelleinheit 47 auch mit Hilfe eines pyrotechnischen Gasgenerators angetrieben werden. Die Verstelleinheit 47 kann mit Hilfe einer Aufhängung 49 an der Fahrzeugzelle 2, insbesondere an der Innenseite 28 der Wandung 20, aufgehängt sein. Die Aufhängung 49 kann strebenförmig sein. Die Aufhängung 49 kann aus Rohren aufgebaut sein.

Der Aktor 45 ist mit Hilfe einer Kopplungseinheit 50 mit der Verstelleinheit 47 gekoppelt. Die von der Kopplungseinheit 50 verwirklichte Kopplung kann rein mechanisch, das heißt ohne elektronische oder elektrische Komponenten, fungieren. In diesem Fall kann die Kopplungseinheit 50 beispielsweise ein Getriebe sein oder ein Getriebe aufweisen, dass den Aktor 45, insbesondere das Auslöseelement 42, mechanisch mit der Verstelleinheit 47 oder mit dem Tragelement 46 koppelt. Die Kopplungseinheit 50 kann beispielsweise aus unterschiedlichen Hebeln, Zahnrädern oder anderen geeigneten Maschinenelementen aufgebaut sein. Alternativ kann die Kopplungseinheit 50 jedoch auch elektronisch, insbesondere elektromechanisch, fungieren, wie nachfolgend erläutert wird.

Die Kopplungseinheit 50 koppelt den Aktor 45 derart mit der Verstelleinheit 47, dass das Tragelement 46 durch das Verbringen des Auslöseelements 42 von dem ausgefahrenen Zustand Z10 in den eingefahrenen Zustand Z20 ebenfalls von einem in der Fig. 3 gezeigten ausgefahrenen Zustand Z100 in einen in der Fig. 4 gezeigten eingefahrenen Zustand Z200 verbracht wird. Wie zuvor erwähnt, wird das Auslöseelement 42 mit Hilfe des Verbringens des Auslöseaufbaus 30 von dem ausgeklappten Zustand Z1 in den eingeklappten Zustand Z2 von dem ausgefahrenen Zustand Z 10 in den eingefahrenen Zustand Z20 verbracht.

Die Kopplungseinheit 50 kann auch dazu eingerichtet sein, einen Auslöseelementverfahrweg des Auslöseelements 42 entgegen der y-Richtung y bei dem Verbringen desselben von dem ausgefahrenen Zustand Z 10 in den eingefahrenen Zustand Z20 in einen Tragelementverfahrweg des Tragelements 46 entgegen der y-Richtung y bei dem Verbringen desselben von dem ausgefahrenen Zustand Z100 in den eingefahrenen Zustand Z200 umzusetzen, der größer als der Auslöseelementverfahrweg ist.

Mit anderen Worten kann die Kopplungseinheit 50 dafür sorgen, dass das Tragelement 46 bei dem Verbringen desselben von dem ausgefahrenen Zustand Z100 in den eingefahrenen Zustand Z200 weiter in den Innenraum 3 hineingefahren wird, als das Auslöseelement 42 bei einem Überschlag des Fahrzeugs 1 in das Führungselement 44 hineingedrückt wird. Hierzu kann mit Hilfe der Kopplungseinheit 50 ein geeignetes Übersetzungsverhältnis verwirklicht werden. Dies kann konstruktiv mit Hilfe eines Getriebes und/oder einer geeigneten Anordnung von Hebeln und/oder Hebelarmen verwirklicht werden.

Die Kopplungseinheit 50 kann beispielsweise ein Übersetzungsverhältnis von 1:1 aufweisen. In diesem Fall kann mit Hilfe der Kopplungseinheit 50 beispielsweise ein Auslöseelementverfahrweg des Auslöseelements 42 entgehen der y-Richtung y von 10 Zentimetern in einen Tragelementverfahrweg des Tragelements 46 entgegen der y-Richtung y von 10 cm umgesetzt werden. Für den Fall, dass die Kopplungseinheit 50 ein beispielhaftes Übersetzungsverhältnis von 1:2 aufweist, wird dementsprechend der vorgenannte beispielhafte Auslöseelementverfahrweg des Auslöseelements 42 von 10 Zentimetern in einen Tragelementverfahrweg des Tragelements 46 von 20 Zentimetern umgesetzt. Das Übersetzungsverhältnis kann grundsätzlich beliebig gewählt werden.

Alternativ kann mit Hilfe der Kopplungseinheit 50 auch eine Untersetzung zwischen dem Auslöseelement 42 und dem Tragelement 46 verwirklicht werden. In diesem Fall ist der Tragelementverfahrweg des Tragelements 46 kleiner als der Auslöseelementverfahrweg des Auslöseelements 42.

In dem ausgefahrenen Zustand Z 100 des Tragelements 46 befindet sich das Besatzungsmitglied 29 zeitgleich sowohl teilweise außerhalb des Innenraums 3 als auch innerhalb des Innenraums 3. Beispielsweise ragt der Kopf des Besatzungsmitglieds 29 in dem ausgefahrenen Zustand Z100 in die Umgebung 4 hinein, so dass das Besatzungsmitglied 29 über Luke fahren kann. In dem eingefahrenen Zustand Z200 ist das Besatzungsmitglied 29 hingegen vollständig innerhalb des Innenraums 3 angeordnet.

Das Tragelement 46 wird also zeitgleich mit dem Verbringen des Auslöseaufbaus 30 von dem ausgeklappten Zustand Z1 in den eingeklappten Zustand Z2 automatisiert in den Innenraum 3 zurückgezogen, so dass sich das Besatzungsmitglied 29 im Falle eines Überschlags des Fahrzeugs 1 vollständig innerhalb des Innenraums 3 befindet. Die Bewegung des Tragelements 46 bei dem Verbringen desselben von dem ausgefahrenen Zustand Z100 in den eingefahrenen Zustand Z200 ist in der Fig. 4 mit Hilfe eines Pfeils 51 angedeutet.

Im Falle eines Überschlags stürzt das Fahrzeug 1 nun auf den sich in dem ausgeklappten Zustand Z1 befindenden Auslöseaufbau 30, wodurch das Tragelement 46 mit dem Besatzungsmitglied 29 vollständig in den Innenraum 3 zurückgezogen wird, indem das Tragelement 46 von dem ausgefahrenen Zustand Z100 in den eingefahrenen Zustand Z200 verbracht wird.

Das Besatzungsmitglied 29 wird so bei einem Überschlag des Fahrzeugs 1 nun vor einem direkten Kontakt mit sich in der Umgebung 4 befindlichen Objekten oder mit dem Untergrund 18 geschützt. Ferner kann das Besatzungsmitglied 29 auch nicht unter dem umgekippten Fahrzeug 1 eingeklemmt werden. Das Überrollschutzsystem 19A ermöglicht somit einen zuverlässigen Schutz des Besatzungsmitglieds 29 bei einem Überschlag des Fahrzeugs 1. Somit können schwere bis tödliche Verletzungen des Besatzungsmitglieds 29 vermieden werden.

Unter einem "Überschlag" ist vorliegend insbesondere zu verstehen, dass sich das Fahrzeug 1 zumindest auf das Dach 5 oder auf die Vorderwand 6 dreht. Dies schließt jedoch nicht aus, dass sich das Fahrzeug 1 bei einem Überschlag auch zumindest einmal vollständig, das heißt um 360°, oder auch mehrfach um die x-Richtung x, die y-Richtung y und/oder die z-Richtung z dreht.

Das Überrollschutzsystem 19A kann ferner eine Sensorik 52 aufweisen. Die Sensorik 52 kann verschiedenste Sensoren umfassen. Die Sensorik 52 ist mit einer Regel- und Steuereinheit 53 des Überrollschutzsystems 19A wirkverbunden. Die Wirkverbindung kann drahtgebunden oder drahtlos sein. Die Regel- und Steuereinheit 53 kann ein fahrzeuginternes System, wie beispielsweise ein CAN-Knoten (Engl.: Controller Area Network), oder ein beliebiges Steuergerät sei. Die Regel- und Steuereinheit 53 kann wiederum mit dem Aktor 45 wirkverbunden sein. Der Aktor 45 kann in diesem Fall beispielsweise einen Sensor aufweisen, der erfasst, ob sich das Auslöseelement 42 in dem ausgefahrenen Zustand Z10 oder in dem eingefahrenen Zustand Z20 befindet. Auch hier kann die Wirkverbindung drahtgebunden oder drahtlos sein.

Ferner kann die Regel- und Steuereinheit 53 auch mit der Verstelleinheit 47 und/oder der Kopplungseinheit 50 wirkverbunden sein. Auch hier kann die Wirkverbindung drahtgebunden oder drahtlos sein. Die Regel- und Steuereinheit 53 dient zur Datenauswertung und zur Weitergabe von Steuersignalen an die Verstelleinheit 47 und/oder an die Kopplungseinheit 50. Die Regel- und Steuereinheit 53 kann Sensordaten des Aktors 45, insbesondere des zuvor erwähnten Sensors des Aktors 45, erfassen und/oder auswerten.

Ermittelt die Regel- und Steuereinheit 53 nun, dass sich das Auslöseelement 42 von dem ausgefahrenen Zustand Z10 in den eingefahrenen Zustand Z20 bewegt, steuert die Regel- und Steuereinheit 53 die Verstelleinheit 47 derart an, dass diese das Tragelement 46 von dem ausgefahrenen Zustand Z100 in den eingefahrenen Zustand Z200 verbringt und das Besatzungsmitglied 29 somit vollständig in den Innenraum 3 hineinzieht.

Die Kopplungseinheit 50 wird in diesem Fall dadurch verwirklicht, dass die Regel- und Steuereinheit 53 die Verstelleinheit 47 basierend auf Sensorsignalen der Sensorik 52 ansteuert, um das Tragelement 46 in den eingefahrenen Zustand Z200 zu verbringen. Es ist somit keine direkte mechanische Kopplung zwischen dem Auslöseelement 42 und der Verstelleinheit 47 oder dem Tragelement 46 vorgesehen. Die Kopplungseinheit 50 kann in diesem Fall den Aktor 45, die Sensorik 52 und/oder die Regel- und Steuereinheit 53 aufweisen.

Zum Verbringen des Tragelements 46 von dem ausgefahrenen Zustand Z100 in den eingefahrenen Zustand Z200 können mechanische, pneumatische, hydraulische, elektromechanische Wirkprinzipien oder eine Kombination dieser eingesetzt werden. Beispielsweise kann das Tragelement 46 mit Hilfe von vorgespannten Federelementen von dem ausgefahrenen Zustand Z100 in den eingefahrenen Zustand Z200 verbracht werden. Ferner kann dieses Einziehen des Tragelements 46 auch mit Hilfe eines hydraulischen, pneumatischen oder hydropneumatischen Zylinders erfolgen. Außerdem kann das Tragelement 46 mit Hilfe eines Elektromotors oder eines Gasgenerators, insbesondere eines pyrotechnischen Gasgenerators, von dem ausgefahrenen Zustand Z100 in den eingefahrenen Zustand Z200 verbracht werden.

Die Vorteile der Umsetzung des Überrollschutzsystems 19A liegen darin, dass der zusätzliche Schutz des Besatzungsmitglieds 29 nicht permanent außerhalb des Fahrzeugs 1 verbleibt und nicht auf die Gewichtskraft G des Fahrzeugs 1 ausgelegt sein muss. Ferner kann je nach Ausführung des Überrollschutzsystems 19A dieses mit minimalem Aufwand nachträglich in das Fahrzeug 1 integriert werden. Das Überrollschutzsystem 19A bringt keine zusätzlichen Sichteinschränkungen mit sich. Das Überrollschutzsystem 19A kann weitere Doppelfunktionen, wie beispielsweise als Drahtschutzsystem (Engl.: Wire Strike Protection System, WSPS), erfüllen.

Die Kopplung zwischen dem Auslöseaufbau 30 und der Verstelleinheit 47 führt dazu, das Besatzungsmitglied 29 bei einem Überschlag des Fahrzeugs 1 zurück in den Innenraum 3 der Fahrzeugzelle 2 oder des Fahrzeugs 1 geführt wird. Dabei ist die Fahrzeugzelle 2 für einen Überschlag ausgelegt. In dem Moment eines Überschlags wird das Besatzungsmitglied 29 geschützt und kommt nicht mit dem Untergrund 18 oder mit sich in der Umgebung 4 befindenden Objekten direkt in Berührung, so dass schwere bis tödliche Verletzungen vermieden werden können.

Wie zuvor erwähnt, kann das Überrollschutzsystem 19A weitere Funktionen erfüllen. Im Falle des Drahtschutzsystems bedeutet dies, dass beispielweise über eine Fahrbahn gespannte Drahtseile durch den Auslöseaufbau 30 über das Besatzungsmitglied 29 gehoben und/oder das Tragelement 46 durch den Auslöseaufbau 30 nach unten gedrückt wird. Ferner kann das Überrollschutzsystem 19A als Wind- und Witterungsschutz fungieren. Hierzu kann der Auslöseaufbau 30 mit zusätzlichen Scheiben und/oder einer Überdachung ausgestattet werden. Diese können flexibel mit dem Auslöseaufbau 30 während der Fahrt über Luke eingesetzt werden.

Eine mechanische Kopplung zwischen dem Auslöseaufbau 30 und dem Tragelement 46 sorgt für eine hohe Ausfallsicherheit. Das Überrollschutzsystem 19A wird dann benötigt, wenn das Fahrzeug 1 nahezu auf dem Kopf liegt. In diesem Zustand wird das Überrollschutzsystem 19A insbesondere durch die mechanische Kopplung dazu gezwungen, auszulösen. Auf eine aufwändige Sensorik, Regelungstechnik oder platzraubende sowie kostspielige Aktuatoren kann vorteilweise verzichtet werden.

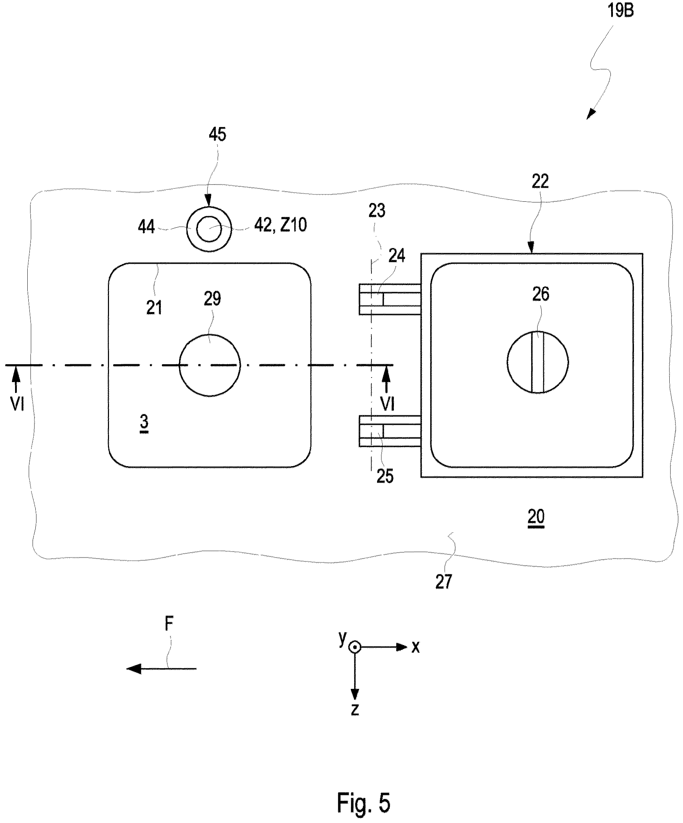

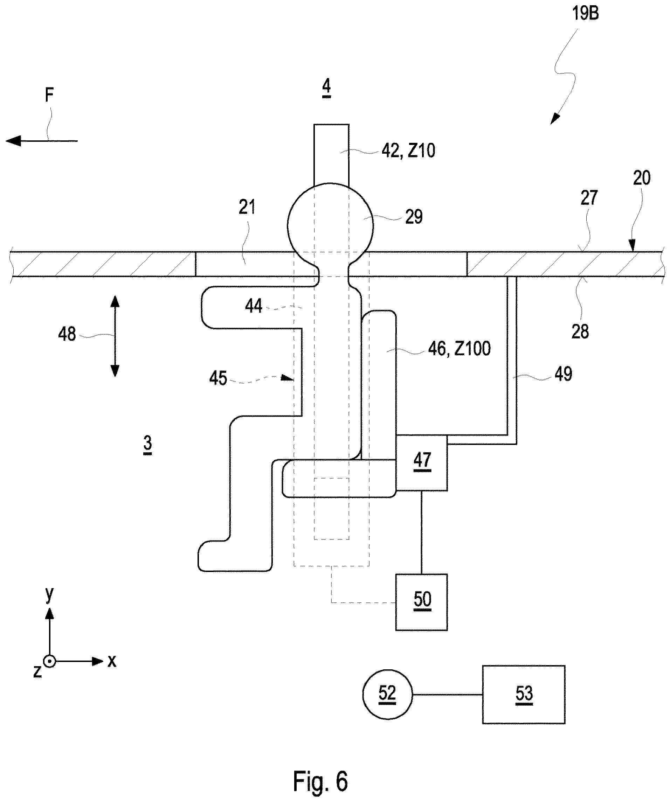

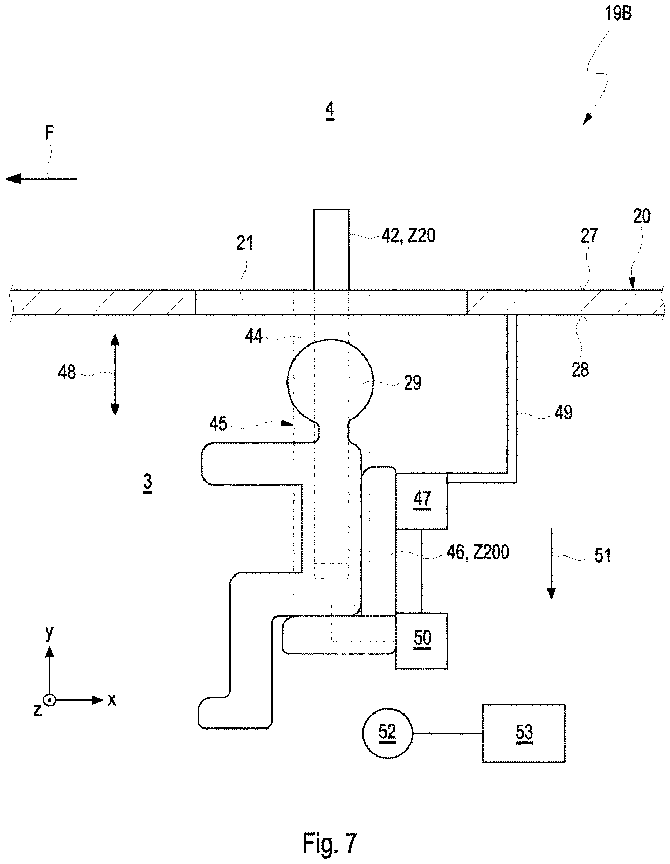

Die Fig. 5 zeigt eine schematische Aufsicht einer weiteren Ausführungsform eines Überrollschutzsystem 19B für das Fahrzeug 1. Die Fig. 6 zeigt eine schematische Schnittansicht des Überrollschutzsystems 19B. Die Fig. 7 zeigt eine weitere schematische Schnittansicht des Überrollschutzsystems 19B. Nachfolgend wird auf die Fig. 5 bis 7 gleichzeitig Bezug genommen.

Das Überrollschutzsystem 19B entspricht von seinem Aufbau und seiner Funktion im Wesentlichen dem des Überrollschutzsystems 19A. Daher wird im Folgenden nur auf Unterschiede des Überrollschutzsystems 19B zu dem Überrollschutzsystem 19A eingegangen. Alle vorherigen Ausführungen betreffend das Überrollschutzsystems 19A sind entsprechend auf das Überrollschutzsystem 19B und umgekehrt anwendbar.

Das Überrollschutzsystem 19B umfasst ein Auslöseelement 42, ein Führungselement 44, das zusammen mit dem Auslöseelement 42 einen Aktor 45 bildet, ein Tragelement 46 mit einer Verstelleinheit 47 und einer Aufhängung 49. Ferner kann das Überrollschutzsystem 19B eine Kopplungseinheit 50, eine Sensorik 52 und/oder eine Regel- und Steuereinheit 53 aufweisen.

Das Überrollschutzsystem 19B unterscheidet sich von dem Überrollschutzsystem 19A nur dadurch, dass das Überrollschutzsystem 19B keinen wie zuvor erwähnten Auslöseaufbau 30 aufweist. Bei einem Überschlag des Fahrzeugs 1 kommt somit das Auslöseelement 42 direkt, das heißt ohne die mittelbare Auslösung mit Hilfe des Auslöseaufbaus 30, in Kontakt mit dem Untergrund 18 oder dergleichen, wodurch das Auslöseelement 42 von seinem in den Fig. 5 und 6 gezeigten ausgefahrenen Zustand Z10 in seinen in der Fig. 7 gezeigten eingefahrenen Zustand Z20 verbracht wird. Hierdurch wird wiederum das Tragelement 46, wie zuvor mit Bezug auf das Überrollschutzsystem 19A erläutert, von dem ausgefahrenen Zustand Z100 in den eingefahrenen Zustand Z200 verbracht.

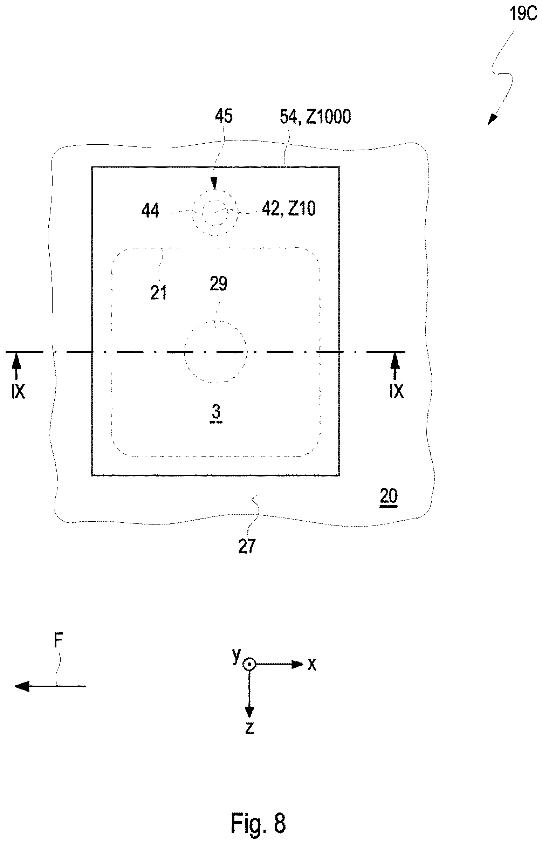

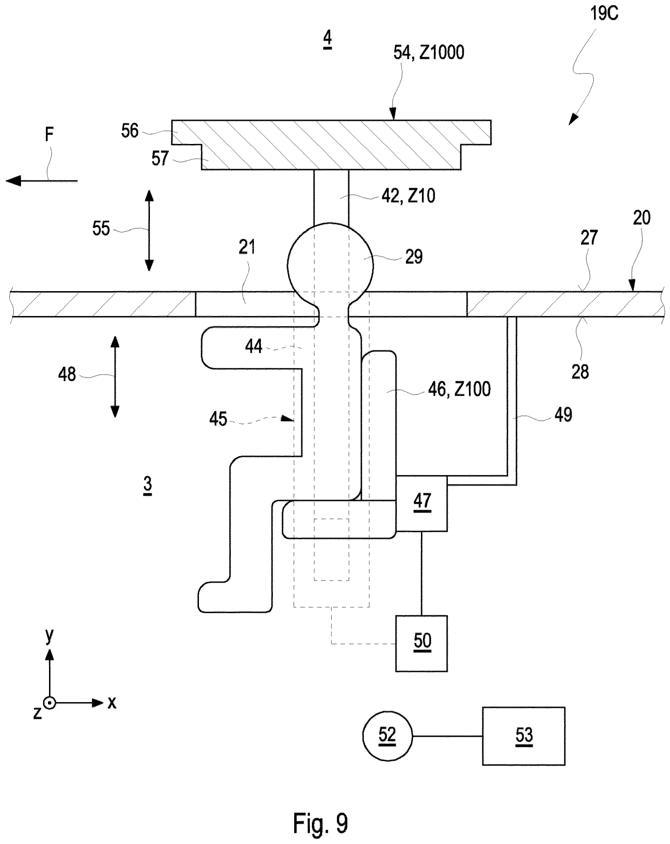

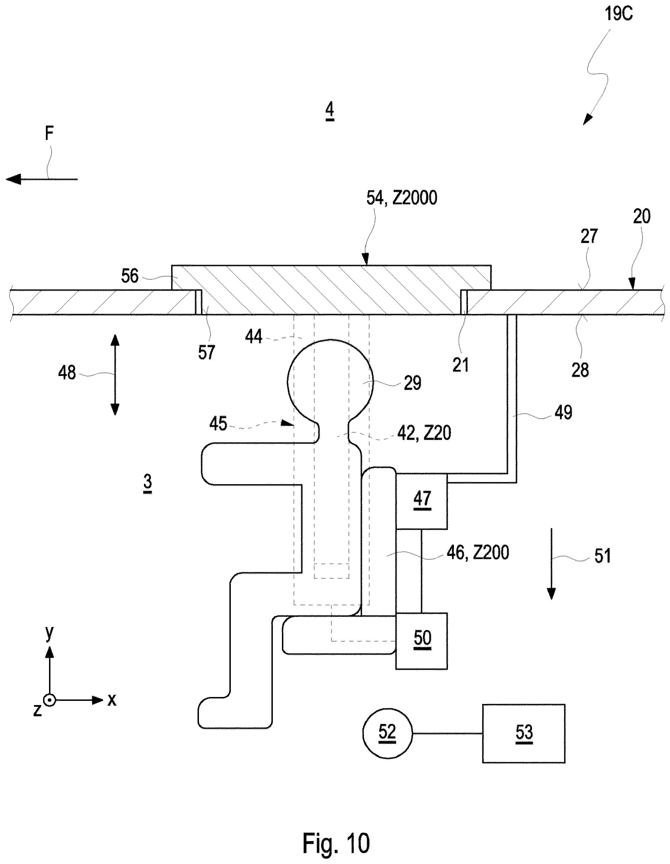

Die Fig. 8 zeigt eine schematische Aufsicht einer weiteren Ausführungsform eines Überrollschutzsystem 19C für das Fahrzeug 1. Die Fig. 9 zeigt eine schematische Schnittansicht des Überrollschutzsystems 19C. Die Fig. 10 zeigt eine weitere schematische Schnittansicht des Überrollschutzsystems 19C. Nachfolgend wird auf die Fig. 8 bis 10 gleichzeitig Bezug genommen.

Im Unterschied zu den Ausführungsformen des Überrollschutzsystems 19A, 19B weist das Überrollschutzsystem 19C zum Verschließen der Lukenöffnung 21 keinen klappbaren Lukendeckel 22, sondern einen Hublukendeckel 54 auf. Unter einem "Hublukendeckel" ist vorliegend ein Lukendeckel zu verstehen, der zum Öffnen und Verschließen der Lukenöffnung 21 entlang und entgegen der y-Richtung y verfahren werden kann, wie in der Fig. 9 mit Hilfe eines Doppelpfeils 55 angedeutet ist. Der Hublukendeckel 54 kann mit Hilfe einer innenseitig an diesem vorgesehenen Verriegelungseinheit 26 (nicht gezeigt) verriegelt und entriegelt werden, wie dies schon zuvor erläutert wurde.

Der Hublukendeckel 54 kann von einem in den Fig. 8 und 9 gezeigten geöffneten Zustand Z1000, in dem das Besatzungsmitglied 29 über Luke fahren kann, in einen in der Fig. 10 gezeigten geschlossenen Zustand Z2000, in dem der Hublukendeckel 54 zumindest abschnittsweise an der Außenseite 27 der Wandung 20 anliegt, und umgekehrt verbracht werden. Der Hublukendeckel 54 kann einen plattenförmigen Basisabschnitt 56, der in dem geschlossenen Zustand Z2000 des Hublukendeckels 54 an der Außenseite 27 aufliegt, und einen Flanschabschnitt 57 aufweisen, der in dem geschlossenen Zustand Z2000 des Hublukendeckels 54 in der Lukenöffnung 21 aufgenommen ist.

Das Überrollschutzsystem 19C entspricht bis auf den Hublukendeckel 54 von seinem Aufbau und seiner Funktion im Wesentlichen dem des Überrollschutzsystems 19A. Daher wird im Folgenden nur auf Unterschiede des Überrollschutzsystems 19C zu dem Überrollschutzsystem 19A eingegangen. Alle vorherigen Ausführungen betreffend das Überrollschutzsystems 19A sind entsprechend auf das Überrollschutzsystem 19C und umgekehrt anwendbar.

Das Überrollschutzsystem 19C umfasst ein Auslöseelement 42, ein Führungselement 44, das zusammen mit dem Auslöseelement 42 einen Aktor 45 bildet, ein Tragelement 46 mit einer Verstelleinheit 47 und einer Aufhängung 49. Ferner kann das Überrollschutzsystem 19C eine Kopplungseinheit 50, eine Sensorik 52 und/oder eine Regel- und Steuereinheit 53 aufweisen. Es können beispielsweise auch zwei oder mehr als zwei Auslöseelemente 42 vorgesehen sein, die in der Orientierung der Fig. 8 oberhalb und unterhalb der Lukenöffnung 21 angeordnet sind. Dementsprechend können dann auch zwei Führungselemente 44 und damit auch zwei Aktoren 45 vorgesehen sein.

Nachfolgend wird davon ausgegangen, dass genau ein Auslöseelement 42 vorgesehen ist. Der Hublukendeckel 54 ist fest mit dem Auslöseelement 42 verbunden. Beispielsweise kann der Hublukendeckel 54 mit dem Auslöseelement 42 verschraubt und/oder verschweißt sein. Hierzu kann endseitig an dem Auslöseelement 42 ein Befestigungsflansch angebracht sein. Durch ein Verbringen des Hublukendeckels 54 von dem geöffneten Zustand Z1000 in den geschlossenen Zustand Z2000 wird das Auslöseelement 42 von dem ausgefahrenen Zustand Z10 in den eingefahrenen Zustand Z20 verbracht.

Das Überrollschutzsystem 19C unterscheidet sich von dem Überrollschutzsystem 19A demgemäß nur dadurch, dass das Überrollschutzsystem 19C keinen wie zuvor erwähnten Auslöseaufbau 30 zum Auslösen des Auslöseelements 42 aufweist, sondern, dass das Auslöseelement 42 mit Hilfe des Hublukendeckels 54 von dem ausgefahrenen Zustand Z10 in den eingefahrenen Zustand Z20 verbracht wird.

Bei einem Überschlag des Fahrzeugs 1 kommt somit der Hublukendeckel 54 direkt in Kontakt mit dem Untergrund 18 oder dergleichen, wodurch das Auslöseelement 42 von seinem in den Fig. 8 und 9 gezeigten ausgefahrenen Zustand Z10 in seinen in der Fig. 10 gezeigten eingefahrenen Zustand Z20 verbracht wird. Hierdurch wird wiederum das Tragelement 46, wie zuvor mit Bezug auf das Überrollschutzsystem 19A erläutert, von dem ausgefahrenen Zustand Z100 in den eingefahrenen Zustand Z200 verbracht.

Bei dem Überrollschutzsystem 19C mit dem Hublukendeckel 54 kann neben einem Wetterschutz gleichermaßen ein taktischer Schutz von oben erreicht werden. Hierzu kann der Hublukendeckel 54 mit zusätzlichen Scheiben ausgestattet werden. Diese können flexibel während der Fahrt über Luke eingesetzt werden und/oder gleichzeitig als ballistischer Schutz des Besatzungsmitglieds 29 vor einem Beschuss, insbesondere mit Handfeuerwaffen, fungieren. Dies ist bedingt durch den grundsätzlichen Aufbau des Hublukendeckels 54, der entlang und entgegen der y-Richtung y linear verfahren werden kann. Beispielsweise ist es möglich, den Hublukendeckel 54 um eine weitere Lukenöffnung mit einem Lukendeckel zu erweitern. Es ergibt sich dann ein Luke-in-Luke-Aufbau für den vereinfachten Ein- und Ausstieg sowie für den Fall einer erforderlichen Rettung des Besatzungsmitglieds 29.

Bei allen Ausführungsformen des Überrollschutzsystems 19A, 19B, 19C stellt die Kopplungseinheit 50 die, insbesondere physische, Verbindung zwischen dem Auslöseelement 42 oder dem Aktor 45 und der Verstelleinheit 47 und damit auch dem Tragelement 46 dar. Aufgrund der Kopplungseinheit 50 kann das Besatzungsmitglied 29 entlang der y-Richtung y nach oben und umgekehrt verfahren werden. Dies führt dazu, dass etwaige Störkonturen einer Außengeometrie des Fahrzeugs 1 durch die Kopplung vermieden werden können.

Die Kopplung mit Hilfe der Kopplungseinheit 50 kann auf unterschiedlichste Arten erzeugt werden. Folgende Wirkprinzipen der Kopplung sind grundsätzlich möglich. Es kann eine direkte mechanische Kopplung, beispielsweise mit Hilfe von Zahnrädern und/oder Hebelarmen, eine hydraulische Kopplung, eine elektrische Kopplung, eine explosive Kopplung, insbesondere in Form eines pyrotechnischen Gasgenerators, oder beliebige Kombinationen der zuvor erwähnten Wirkmechanismen eingesetzt werden. Insbesondere können auch elektromechanische Wirkprinzipien eingesetzt werden.

Die unterschiedlichen Ausgestaltungen des Wirkprinzips bieten neben der direkten mechanischen Kopplung weitere Vorteile. So können beispielsweise bei einer hydraulischen Kopplung Aufbauten, beispielsweise in Form des Auslöseaufbaus 30, an unterschiedlichen Punkten am Fahrzeug 1 integriert werden. Dies kann dazu führen, dass das Besatzungsmitglied 29 oder gleichzeitig mehrere Besatzungsmitglieder 29 frühzeitig in den Innenraum 3 evakuiert werden können, bevor das Fahrzeug 1 bereits auf dem Dach 5 liegt. Vergleichbare Vorteile bieten sich auch bei einer elektrischen oder explosiven Kopplung.

Neben der rein physischen Umsetzung des Wirkprinzips können noch weitere Gestaltungsmerkmale berücksichtigt werden. Dabei sind reversible und irreversible Vorgänge zu unterscheiden. Eine irreversible Umsetzung kann genutzt werden, indem beispielsweise eine Sollbruchstelle in der Verstelleinheit 47 oder in der Kopplungseinheit 50 zerstört wird, wodurch das Tragelement 46 tiefer in den Innenraum 3 gedrückt wird, sich jedoch nicht mehr entlang der y-Richtung y nach oben bewegen kann. Darüber hinaus kann die Kopplungseinheit 50 derart gestaltet werden, dass sich diese oder das Auslöseelement 42 nach einer einmaligen Auslösung verklemmt. So wird beispielsweise vermieden, dass bei einem mehrmaligen Überschlag des Fahrzeugs 1 das Besatzungsmitglied 29 durch die Fliehkräfte aus der Lukenöffnung 21 herausgehoben wird.

Eine reversible Umsetzung kann beispielsweise derart genutzt werden, dass durch die Kopplungseinheit 50 die Verstelleinheit 47 mitsamt dem Tragelement 46 oder das Tragelement 46 selbst nach unten gedrückt wird und das Tragelement 46 durch eine separate Feder wieder in den ausgefahrenen Zustand Z100 nach oben gedrückt wird. Diese Art der Umsetzung ermöglicht eine Doppelfunktion für die Integration einer Drahtschutz- und/oder Abweisfunktion.

Obwohl die vorliegende Erfindung anhand von Ausführungsbeispielen beschrieben wurde, ist sie vielfältig modifizierbar.

### BEZUGSZEICHENLISTE

- 1: Fahrzeug
- 2: Fahrzeugzelle
- 3: Innenraum
- 4: Umgebung
- 5: Dach
- 6: Vorderwand
- 7: Radachse
- 8: Radachse
- 9: Radachse
- 10: Radachse
- 11: Rad
- 12: Rad
- 13: Rad
- 14: Rad
- 15: Turm
- 16: Bewaffnung
- 17: Drehachse
- 18: Untergrund
- 19A: Überrollschutzsystem
- 19B: Überrollschutzsystem
- 19C: Überrollschutzsystem
- 20: Wandung
- 21: Lukenöffnung
- 22: Lukendeckel
- 23: Drehachse
- 24: Scharnier
- 25: Scharnier
- 26: Verriegelungseinheit
- 27: Außenseite
- 28: Innenseite
- 29: Besatzungsmitglied
- 30: Auslöseaufbau
- 31: Drehachse
- 32: Lagerbock
- 33: Lagerbock
- 34: Lagerbock
- 35: Lagerbock
- 36: Auslösebügel
- 37: Auslösebügel
- 38: Verbindungselement
- 39: Mittelabschnitt
- 40: Seitenabschnitt
- 41: Seitenabschnitt
- 42: Auslöseelement
- 43: Kopplungselement
- 44: Führungselement
- 45: Aktor
- 46: Tragelement
- 47: Verstelleinheit
- 48: Doppelpfeil
- 49: Aufhängung
- 50: Kopplungseinheit
- 51: Pfeil
- 52: Sensorik
- 53: Regel- und Steuereinheit
- 54: Hublukendeckel
- 55: Doppelpfeil
- 56: Basisabschnitt
- 57: Flanschabschnitt

- F: Fahrtrichtung
- g: Schwerkraftrichtung
- G: Gewichtskraft
- x: x-Richtung
- y: y-Richtung
- z: z-Richtung
- Z1: Zustand
- Z2: Zustand
- Z10: Zustand
- Z20: Zustand
- Z100: Zustand
- Z200: Zustand
- Z 1000: Zustand
- Z2000: Zustand

## Patentansprüche

1. Überrollschutzsystem (19A, 19B, 19C) für ein geschütztes Fahrzeug (1), mit
einem Auslöseelement (42) zum Auslösen des Überrollschutzsystems (19A, 19B, 19C),
einem Tragelement (46) zum Tragen eines Besatzungsmitglieds (29), und
einer Kopplungseinheit (50), die das Auslöseelement (42) mit dem Tragelement (46) koppelt, um das Tragelement (46) bei einem Überschlag des geschützten Fahrzeugs (1) von einem ausgefahrenen Zustand (Z100), in dem sich das Besatzungsmitglied (29) teilweise innerhalb und teilweise außerhalb des geschützten Fahrzeugs (1) aufhält, in einen eingefahrenen Zustand (Z200), in dem sich das Besatzungsmitglied (29) vollständig innerhalb des geschützten Fahrzeugs (1) aufhält, zu verbringen, so dass das Besatzungsmitglied (29) während des Überschlags des geschützten Fahrzeugs (1) geschützt ist.

2. Überrollschutzsystem nach Anspruch 1,
**dadurch gekennzeichnet,**
**dass** das Auslöseelement (42) von einem ausgefahrenen Zustand (Z10) in einen eingefahrenen Zustand (Z20) verbringbar ist, wobei das Auslöseelement (42) in dem ausgefahrenen Zustand (Z10) weiter über eine Außenseite (27) des geschützten Fahrzeugs (1) herausragt als in dem eingefahrenen Zustand (Z20)

3. Überrollschutzsystem nach Anspruch 2,
**dadurch gekennzeichnet,**
**dass** die Kopplungseinheit (50) das Auslöseelement (42) derart mit dem Tragelement (46) koppelt, dass die Kopplungseinheit (50) das Tragelement (46) von dem ausgefahrenen Zustand (Z100) in den eingefahrenen Zustand (Z200) verbringt, wenn sich das Auslöseelement (42) von dem ausgefahrenen Zustand (Z10) in den eingefahrenen Zustand (Z20) bewegt.

4. Überrollschutzsystem nach einem der Ansprüche 1 - 3,
**dadurch gekennzeichnet,**
**dass** die Kopplungseinheit (50) das Auslöseelement (42) mechanisch mit dem Tragelement (46) koppelt.

5. Überrollschutzsystem nach einem der Ansprüche 1 - 4,
**gekennzeichnet durch**
einen Auslöseaufbau (30) zum Auslösen des Überrollschutzsystems (19A), wobei der Auslöseaufbau (30) mit dem Auslöseelement (42) gekoppelt ist.

6. Überrollschutzsystem nach Anspruch 5,
**dadurch gekennzeichnet,**
**dass** der Auslöseaufbau (30) um eine Drehachse (31) schwenkbar an dem geschützten Fahrzeug (1) montierbar ist, wobei der Auslöseaufbau (30) um die Drehachse (31) von einem ausgeklappten Zustand (Z1) in einen eingeklappten Zustand (Z2) schwenkbar ist.

7. Überrollschutzsystem nach Anspruch 6,
**dadurch gekennzeichnet,**
**dass** der Auslöseaufbau (30) mit Hilfe des Auslöseelements (42) und der Kopplungseinheit (50) derart mit dem Tragelement (46) gekoppelt ist, dass die Kopplungseinheit (50) das Tragelement (46) von dem ausgefahrenen Zustand (Z100) in den eingefahrenen Zustand (Z200) verbringt, wenn sich der Auslöseaufbau (30) von dem ausgeklappten Zustand (Z1) in den eingeklappten Zustand (Z2) bewegt.

8. Überrollschutzsystem nach Anspruch 6 oder 7,
**dadurch gekennzeichnet,**
**dass** der Auslöseaufbau (30) einen um die Drehachse (31) drehbar gelagerten Auslösebügel (36, 37) aufweist, der mit dem Auslöseelement (42) gekoppelt ist.

9. Überrollschutzsystem nach Anspruch 8,
**gekennzeichnet durch**
einen ersten Auslösebügel (36) und einen beabstandet von dem ersten Auslösebügel (36) angeordneten zweiten Auslösebügel (37), wobei der erste Auslösebügel (36) und der zweite Auslösebügel (37) bevorzugt parallel zueinander verlaufen.

10. Überrollschutzsystem nach Anspruch 9,
**gekennzeichnet durch**
ein senkrecht zu dem ersten Auslösebügel (36) und dem zweiten Auslösebügel (37) orientiertes Verbindungselement (38), das den ersten Auslösebügel (36) mit dem zweiten Auslösebügel (37) verbindet.

11. Überrollschutzsystem nach einem der Ansprüche 8 - 10,
**dadurch gekennzeichnet,**
**dass** der Auslösebügel (36, 37) einen Mittelabschnitt (39) und endseitig an dem Mittelabschnitt (39) angebrachte Seitenabschnitte (40, 41) aufweist, wobei die Seitenabschnitte (40, 41) schräg zu dem Mittelabschnitt (39) orientiert sind.

12. Überrollschutzsystem nach einem der Ansprüche 1 - 4,
**gekennzeichnet durch**
einen Hublukendeckel (54) zum Auslösen des Überrollschutzsystems (19C), wobei der Hublukendeckel (54) mit dem Auslöseelement (42) gekoppelt ist.

13. Überrollschutzsystem nach Anspruch 12,
**dadurch gekennzeichnet,**
**dass** der Hublukendeckel (54) verlagerbar an dem geschützten Fahrzeug (1) montierbar ist, wobei der Hublukendeckel (54) von einem geöffneten Zustand (Z1000), in dem der Hublukendeckel (54) eine dem Hublukendeckel (54) zugeordnete Lukenöffnung (21) freigibt, in einen geschlossenen Zustand (Z2000), in dem der Hublukendeckel (54) die Lukenöffnung (21) verschließt, verbringbar ist.

14. Überrollschutzsystem nach Anspruch 13,
**dadurch gekennzeichnet,**
**dass** der Hublukendeckel (54) mit Hilfe des Auslöseelements (42) und der Kopplungseinheit (50) derart mit dem Tragelement (46) gekoppelt ist, dass die Kopplungseinheit (50) das Tragelement (46) von dem ausgefahrenen Zustand (Z100) in den eingefahrenen Zustand (Z200) verbringt, wenn sich der Hublukendeckel (54) von dem geöffneten Zustand (Z 1000) in den geschlossenen Zustand (Z2000) bewegt.

15. Geschütztes Fahrzeug (1) mit zumindest einem Überrollschutzsystem (19A, 19B, 19C) nach einem der Ansprüche 1 - 14.
